(19) Europäisches Patentamt / European Patent Office / Office européen des brevets

(11) **EP 4 383 747 B1**

(12) **EUROPEAN PATENT SPECIFICATION**

(45) Date of publication and mention
of the grant of the patent:
**10.12.2025 Bulletin 2025/50**

(21) Application number: **22877962.5**

(22) Date of filing: **08.10.2022**

(51) International Patent Classification (IPC):
*H04Q 11/00* (2006.01)    *H04L 67/141* (2022.01)

(52) Cooperative Patent Classification (CPC):
**H04L 67/141; H04Q 11/00; H04Q 11/0067;**
H04Q 2011/0064

(86) International application number:
**PCT/CN2022/123869**

(87) International publication number:
**WO 2023/056947 (13.04.2023 Gazette 2023/15)**

(54) **OPTICAL COMMUNICATION METHOD, DEVICE, AND SYSTEM AND STORAGE MEDIUM**

OPTISCHES KOMMUNIKATIONSVERFAHREN, VORRICHTUNG UND SYSTEM SOWIE SPEICHERMEDIUM

PROCÉDÉ, DISPOSITIF ET SYSTÈME DE COMMUNICATION OPTIQUE ET SUPPORT DE STOCKAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.10.2021 CN 202111177891**

(43) Date of publication of application:
**12.06.2024 Bulletin 2024/24**

(73) Proprietor: **Huawei Technologies Co., Ltd.
Shenzhen, Guangdong 518129 (CN)**

(72) Inventor: **LUO, Yong
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(56) References cited:
CN-A- 101 005 445    CN-A- 101 039 206
CN-A- 108 882 063    US-A1- 2008 025 218

• **"F5G Network Architecture Specification F5G Network Architecture Specification", no. V0.0.7, 8 September 2021 (2021-09-08), pages 1 - 37, XP014414666, Retrieved from the Internet <URL:ftp://docbox.etsi.org/ISG/F5G/70-Draft/ 004_ARCHITECTURE/ F5G-004_ARCHITECTUREv007.docx> [retrieved on 20210908]**
• **LEI XU ; TING WANG ; WEI WEI ; DAYOU QIAN ; PHILIP JI ; JUNQIANG HU: "Advanced broadband optical access networks", WIRELESS AND OPTICAL COMMUNICATIONS CONFERENCE, 2009. WOCC 2009. 18TH ANNUAL, IEEE, 1 May 2009 (2009-05-01), Piscataway, NJ, USA , pages 1 - 3, XP031560175, ISBN: 978-1-4244-5217-0, DOI: 10.1109/ WOCC.2009.5312825**

**Description**

Priority is claimed to Chinese Patent Application No. 202111177891.4 (published as CN115967873(A)), filed with the China National Intellectual Property Administration on October 9, 2021 and entitled "OPTICAL COMMUNICATION METHOD, DEVICE, SYSTEM, AND STORAGE MEDIUM".

**TECHNICAL FIELD**

This disclosure generally relates to the communication field, and the invention more specifically relates to optical communication methods, a network management device, and an electronic device.

**BACKGROUND**

Currently, a network architecture that bears a broadband internet service includes a home network, an access network, a metropolitan area network, a backbone network, and an international internet. A user terminal device in the home network accesses the access network via a home gateway, and further accesses the international internet via the metropolitan area network and the backbone network. From the home network to the backbone network, devices are hierarchically converged to form a tree network.

A service pipe between the home gateway and a broadband network gateway in the backbone network is specific to a user of the user terminal device. In other words, traffic of all applications on the user terminal device of the user is born in one service pipe. The applications on the user terminal device are not finely classified, and differentiated processing on the applications lacks. As a result, user experience is poor.

The standard draft document "F5G Network Architecture Specification F5G Network Architecture Specification", ETSI DRAFT SPECIFICATION; F5G 0 0 4, EUROPEAN TELECOMMUNICATIONS STANDARDS INSTITUTE (ETSI) I 650, ROUTE DES LUCIOLES; F - 06921 SOPHIA-ANTIPOLIS; FRANCE, no. V0.0.7, 8 September 2021 (2021-09-08) , pages 1 - 37, XP014414666 discloses the F5G network architecture and, in particular, the Work Item, W1, defines the F5G E2E network architecture and related network device's requirements, including Customer Premise Network, Access Network, and Aggregation & Transport Network. It also specifies technical requirements for the network devices and elements in the architecture. There is particular focus on Telco networks in view of a service network separation for F5G. Particular aspects thereof are described in sections 5.2 "Architecture overview", 5.3.1 "Network Overview", 5.4.1 "Network Slicing", 5.4.1.7 "PON Slicing", 5.4.3.1.2 "Implementation or separation between service and network", and 5.4.3.2 "The Underlay Plane". The Access Network in the underlay plane is based on XGS-PON technology and MS-OTN, depending on customer type and service delivered. The Underlay Plane is to support end to end slicing, as disclosed in 5.4.1.7 "PON Slicing" and 5.4.3.2 "The Underlay Plane" of this document.

SUMMARY

The object of the present invention is to provide optical communication methods, a network management device, and an electronic device to improve user experience. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, the invention provides an optical communication method. This method according to the invention includes: A network management device receives, from an access side device, a first request message for creating a service pipe, where the first request message includes an identifier of an application that a user terminal device requests to access and an identifier of the access side device. The method further includes: The network management device determines a first optical edge device based on the identifier of the application and the identifier of the access side device. The method further includes: The network management device creates the service pipe between the user terminal device and the first optical edge device. The method further includes: The network management device creates mapping between the application and the service pipe. The method further includes: The network management device sends, to the access side device, information about the mapping, to enable service data associated with the application to be transmitted through the service pipe. In this manner, applications are treated differently, so that user experience is improved.

In some embodiments, the network management device determines a plurality of candidate optical edge devices based on the identifier of the application and the identifier of the access side device. Further, the network management device selects the first optical edge device from the plurality of candidate optical edge devices based on load statuses of the plurality of candidate optical edge devices or historical statistics information of quality of service that is of the plurality of candidate optical edge devices and that is for the application. In this manner, a path of the service pipe may be dynamically adjusted based on a congestion status.

In some embodiments, additionally, the network management device periodically obtains, from the plurality of candidate optical edge devices, statistics information of the quality of service that is of the plurality of candidate optical edge devices and that is for the application. Further, the network management device determines the historical statistics information based on the obtained statistics information. Because backbone networks connected to each optical edge device may be different, in embodiments, an optical edge device that is more application-friendly may be selected to create the service pipe.

In some embodiments, additionally, the network management device determines, based on an identifier of the first optical edge device, the identifier of the access side device, and quality of service needed by the application, a bearer tunnel for bearing the service pipe. Further, the network management device creates mapping between the service pipe and the bearer tunnel. Further, the network management device separately sends, to the access side device and the first optical edge device, information about the mapping between the service pipe and the bearer tunnel. In this manner, the bearer tunnel may be selected based on the quality of service needed by the application.

In some embodiments, additionally, the network management device receives, from the access side device, a second request message for tearing down the service pipe. Further, the network management device tears down the service pipe based on the second request message. In this manner, the service pipe may be dynamically torn down.

In some embodiments, the access side device includes an optical network terminal or an optical line termination.

According to a second aspect of the present invention, the invention also provides another optical communication method. This method includes: After an access side device receives a user request message for accessing an application from a user terminal device, the access side device determines whether a service pipe between the user terminal device and a first optical edge device is created. The method further includes: If it is determined that the service pipe is not created, the access side device sends, to a network management device, a first request message for creating the service pipe, where the first request message includes an identifier of the application and an identifier of the access side device. The method further includes: The access side device receives, from the network management device, information about mapping between the application and the service pipe. The method further includes: The access side device enables, based on the information, service data associated with the application to be transmitted through the service pipe. In this manner, applications are treated differently, so that user experience is improved.

In some embodiments, the access side device determines, based on the identifier of the application, a service pipe policy associated with the application. Further, the access side device determines, in response to that the service pipe policy indicates that the service data associated with the application is transmitted through the service pipe, whether the service pipe is created. Therefore, it may be determined whether to create the service pipe based on the service pipe policy associated with the application.

In some embodiments, additionally, if it is determined that the service pipe is not created, the access side device updates, based on a communication session associated with the application, a communication session list associated with the application, and updates a status of the application to valid.

In some embodiments, the access side device configures, in a forwarding table, a communication session associated with the application. Further, the access side device maps, to the service pipe, traffic associated with the communication session, to enable the service data associated with the application to be transmitted through the service pipe. In this manner, the applications are treated differently, so that user experience is improved.

In some embodiments, additionally, the access side device sends, to the network management device in response to detecting that the application is offline, a second request message for tearing down the service pipe. In this manner, the service pipe may be dynamically torn down.

In some embodiments, the access side device includes an optical network terminal or an optical line termination.

According to a third aspect according to the invention, the invention also provides a network management device of an optical communication network is provided. The network management device includes a first receiving module, a first determining module, a first service pipe creation module, a first mapping creation module, and a first sending module. The first receiving module is configured to receive, from an access side device, a first request message for creating a service pipe, where the first request message includes an identifier of an application that a user terminal device requests to access and an identifier of the access side device. The first determining module is configured to determine a first optical edge device based on the identifier of the application and the identifier of the access side device. The first service pipe creation module is configured to create the service pipe between the user terminal device and the first optical edge device. The first mapping creation module is configured to create mapping between the application and the service pipe. The first sending module is configured to send, to the access side device, information about the mapping, to enable service data associated with the application to be transmitted through the service pipe.

In some embodiments, the first determining module is further configured to: determine a plurality of candidate optical edge devices based on the identifier of the application and the identifier of the access side device, and select the first optical edge device from the plurality of candidate optical edge devices based on load statuses of the plurality of candidate optical edge devices or historical statistics information of quality of service that is of the plurality of candidate optical edge devices and that is for the application.

In some embodiments, the network management device further includes a statistics information obtaining module, configured to periodically obtain, from the plurality of candidate optical edge devices, statistics information of the quality of service that is of the plurality of candidate optical edge devices and that is for the application. In this embodiment, the first determining module is further configured to determine the historical statistics information based on the obtained statistics information.

In some embodiments, the first determining module is further configured to determine, based on an identifier of the first optical edge device, the identifier of the access side device, and quality of service needed by the application, a bearer tunnel for bearing the service pipe. In this embodiment, the first mapping creation module is further configured to create mapping between the service pipe and the bearer tunnel. The first sending module is further configured to separately send, to the access side device and the first optical edge device, information about the mapping between the service pipe and the bearer tunnel.

In some embodiments, the first receiving module is further configured to receive, from the access side device, a second request message for tearing down the service pipe. In this embodiment, the network management device further includes a tearing-down module, configured to tear down the service pipe based on the second request message.

In some embodiments, the access side device includes an optical network terminal or an optical line termination.

In some embodiments, the network management device further includes a second receiving module, a second determining module, a second service pipe creation module, a second mapping creation module, and a second sending module. The second receiving module is configured to receive, from the access side device, a third request message for creating a user-level service pipe, where the third request message includes the identifier of the access side device. The second determining module is configured to determine a second optical edge device based on the identifier of the access side device and load statuses of a plurality of candidate optical edge devices. The second service pipe creation module is configured to create the user-level service pipe between the user terminal device and the second optical edge device. The second mapping creation module is configured to create mapping between a user of the user terminal device and the user-level service pipe. The second sending module is configured to send, to the access side device, information about the mapping between the user and the user-level service pipe, to enable service data associated with the user to be transmitted through the user-level service pipe.

In some embodiments, the network management device further includes a third receiving module, a third determining module, a third service pipe creation module, a third mapping creation module, and a third sending module. The third receiving module is configured to receive, from the access side device, a fourth request message for creating a terminal-level service pipe. The fourth request message includes an identifier of the user terminal device, a type of the user terminal device, and the identifier of the access side device. The third determining module is configured to determine a third optical edge device based on the identifier of the user terminal device, the type of the user terminal device, and the identifier of the access side device. The third service pipe creation module is configured to create the terminal-level service pipe between the user terminal device and the third optical edge device. The third mapping creation module is configured to create mapping between the user terminal device and the terminal-level service pipe. The third sending module is configured to send, to the access side device, information about the mapping between the user terminal device and the terminal-level service pipe, to enable service data associated with the user terminal device to be transmitted through the terminal-level service pipe.

According to a fourth aspect of embodiments of this disclosure, wherein the fourth aspect and any of its implementations and options below are not claimed, an access side device in an optical communication network is provided. The access side device includes a determining module, a sending module, a receiving module, and a transmission module. The determining module is configured to: after the access side device receives a user request message for accessing an application from a user terminal device, determine whether a service pipe between the user terminal device and a first optical edge device is created. The sending module is configured to: if it is determined that the service pipe is not created, send, to a network management device, a request for creating the service pipe, where the request includes an identifier of the application and an identifier of the access side device. The receiving module is configured to receive, from the network management device, information about mapping between the application and the service pipe. The transmission module is configured to enable, based on the information, service data associated with the application to be transmitted through the service pipe.

In some not claimed embodiments of the above not claimed access side device, the determining module is further configured to: determine, based on the identifier of the application, a service pipe policy associated with the application; and determine, in response to that the service pipe policy indicates that the service data associated with the application is transmitted through the service pipe, whether the service pipe is created.

In some not claimed embodiments of the above not claimed access side device, the access side device further includes an updating module. The updating module is configured to: if it is determined that the service pipe is not created, update, based on a communication session associated with the application, a communication session list associated with the application, and update a status of the application to valid.

In some not claimed embodiments of the above not claimed access side device, the transmission module is further configured to: configure, in a forwarding table, a communication session associated with the application, and map, to the service pipe, traffic associated with the communication session.

In some not claimed embodiments of the above not claimed access side device, the sending module is further configured to send, to the network management device in response to detecting that the application is offline, a second request message for tearing down the service pipe.

In some not claimed embodiments of the above not claimed access side device, the sending module is further configured to: if the access side device is powered on, send, to the network management device, a third request message for creating a user-level service pipe, where the third request message includes the identifier of the access side device. In this embodiment, the receiving module is further configured to receive, from the network management device, information about mapping between a user of the user terminal device and the user-level service pipe. In this embodiment, the transmission module is further configured to enable, based on the information about the mapping between the user and the user-level service pipe, service data associated with the user to be transmitted through the user-level service pipe.

In some not claimed embodiments of the above not claimed access side device, the sending module is further configured to: if it is detected that the user terminal device accesses the access side device, send, to the network management device, a fourth request message for creating a terminal-level service pipe, where the fourth request message includes an identifier of the user terminal device and the identifier of the access side device. In this embodiment, the receiving module is further configured to receive, from the network management device, information about mapping between the user terminal device and the terminal-level service pipe. In this embodiment, the transmission module is further configured to enable, based on the information about the mapping between the user terminal device and the terminal-level service pipe, service data associated with the user terminal device to be transmitted through the terminal-level service pipe.

According to a fifth aspect of embodiments of this disclosure, wherein the fifth aspect and any of its implementations and options below are not claimed, an optical communication system is provided. The optical communication system includes the network management device according to the third aspect of embodiments of this disclosure, the access side device according to the fourth aspect of embodiments of this disclosure, and a first optical edge device. The network management device is communicatively connected to the access side device and the first optical edge device.

According to a sixth aspect of according to the invention, an electronic device comprising the above network management device according to the third aspect is provided. The electronic device may include, although not claimed, a processor and a memory. The memory includes computer program code. The memory and the computer program code are used to enable, together with the processor, the electronic device to perform the method according to the first aspect or the second aspect.

According to a seventh not claimed aspect of embodiments of this disclosure, a computer-readable storage medium is provided. The computer-readable storage medium includes machine-executable instructions. When the machine-executable instructions are executed by a device, the device is enabled to perform the method according to the first aspect or the second aspect.

It is understood from the following descriptions of the example embodiments that, based on the technical solutions provided herein, a quality condition of each link in an Ethernet loop may be determined in time, and protection switching is performed in time to achieve link optimization. In this way, service loss can be further avoided, and service experience can be improved.

It should be understood that content described in the SUMMARY section is not intended to limit key or important features of embodiments of this disclosure, nor is it intended to limit the scope of this disclosure. Other features of this disclosure will be readily understood through the following descriptions.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

## BRIEF DESCRIPTION OF DRAWINGS

Features, advantages, and other aspects of implementations of this disclosure are to become more apparent with reference to the accompanying drawings and with reference to the following detailed descriptions. Several implementations of this disclosure are shown herein by way of example rather than limitation. In the accompanying drawings:

FIG. 1A is a schematic block diagram of an existing network architecture for bearing a broadband internet service;
FIG. 1B is a schematic block diagram of an existing tree network architecture for bearing a broadband internet service;
FIG. 2 is a schematic diagram of an existing service model of a broadband internet service;
FIG. 3 shows an existing connection and session creation process of a service model of a broadband internet service;
FIG. 4 is a detailed diagram of an internet service pipe between a home gateway and a broadband network gateway shown in FIG. 2;
FIG. 5 is a schematic block diagram of an example network architecture in which embodiments of this disclosure can be implemented;
FIG. 6 is a schematic diagram of a bearer tunnel according to some embodiments of this disclosure;
FIG. 7 is a diagram of signaling interworking in an example process for creating a service pipe according to an embodiment of this disclosure;
FIG. 8 is a flowchart of an example method for creating a service pipe according to some embodiments of this disclosure;
FIG. 9 is a flowchart of an example method for creating a service pipe according to some other embodiments of this disclosure;
FIG. 10 is a schematic block diagram of an electronic apparatus suitable for implementing some embodiments of this disclosure;
FIG. 11 is a schematic block diagram of an electronic apparatus suitable for implementing some other embodiments of this disclosure; and
FIG. 12 is a simplified block diagram of an electronic device suitable for implementing an embodiment of this disclosure.

In the accompanying drawings, same or similar reference numerals indicate same or similar elements.

## DESCRIPTION OF EMBODIMENTS

Embodiments of this disclosure are described in more detail in the following with reference to the accompanying drawings. Although some embodiments of this disclosure are illustrated in the accompanying drawings, it should be understood that this disclosure may be implemented in various forms and should not be construed as limited to embodiments described herein. On the contrary, these embodiments are provided for a more thorough and complete understanding of this disclosure. It should be understood that the accompanying drawings and embodiments of this disclosure are merely used as examples, but are not intended to limit the protection scope of this disclosure.

As used herein, the term "include" and variants thereof indicate open inclusion, that is, "include but is not limited to". The term "based on" indicates "at least partly based on". The term "one embodiment" indicates "at least one embodiment". The term "another embodiment" indicates "at least one another embodiment". Definitions of other terms are provided in the following descriptions.

It should be understood that although the terms "first", "second", and the like may be used herein to describe various components, these components should not be limited by these terms. The terms are merely used to distinguish one component from another component. For example, a first component may be referred to as a second component, and similarly the second component may be referred to as the first component without departing from the scope of embodiments. As used herein, the term "and/or" includes any and all combinations of one or more of the listed terms.

As used herein, the term "circuit" refers to one or more of the following:

(a) an implementation of only a hardware circuit (such as an implementation of only an analog and/or digital circuit);
(b) a combination of a hardware circuit and software, such as (if applicable): (i) a combination of an analog and/or digital hardware circuit and software/firmware, and (ii) any part of a hardware processor and software (including a digital signal processor, software, and a memory that work together to enable an apparatus such as an optical line termination (OLT), another computing device, or the like to perform various functions); and
(c) a hardware circuit and/or a processor, such as a microprocessor or a part of a microprocessor, which requires software (such as firmware) for operation, but may not have the software when the software is not needed for operation.

The definition of the circuit is applicable to all scenarios of use of the term in this application (including any claim). In another example, the term "circuit" used herein alternatively covers implementations of only a hardware circuit or processor (or a plurality of processors), a part of a hardware circuit or processor, or software or firmware accompanying a hardware circuit or processor. For example, if applicable to a particular claim element, the term "circuit" further covers a baseband integrated circuit, a processor integrated circuit, or a similar integrated circuit in another computing device.

## Conventional network architecture

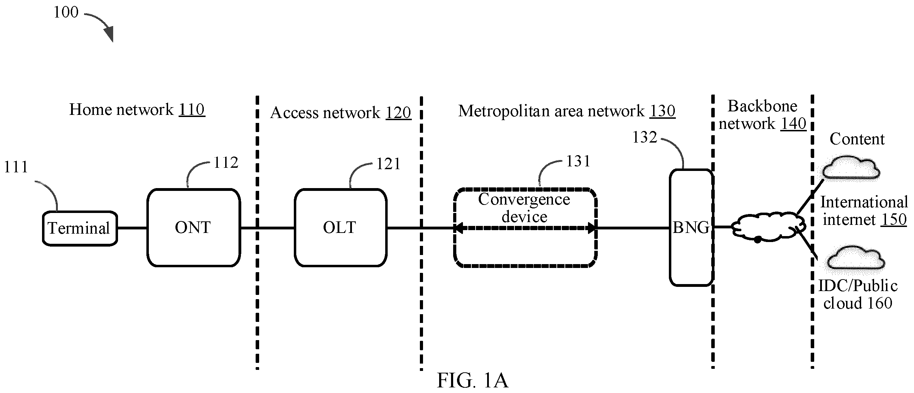

FIG. 1A is a schematic block diagram of a conventional network architecture 100 for bearing a broadband internet service. As shown in the figure, the network architecture 100 may include a home network 110, an access network 120, a metropolitan area network 130, a backbone network 140, an international internet 150, and an internet data center (Internet Data Center, IDC) or a public cloud 160.

The home network 110 includes a user terminal device 111 and an optical network terminal (Optical Network Terminal, ONT) 112. The ONT 112 serves as a home gateway, and may be connected to the user terminal device 111 by using a short-range radio access technology (for example, Wi-Fi) or the Ethernet. In the accompanying drawings, for brevity, the user terminal device is also referred to as a "terminal".

The access network 120 is typically a fibre to the home (Fibre to the Home, FTTH) network using a passive optical network (Passive Optical Network, PON) technology. The access network 120 includes an optical line termination (Optical Line Termination, OLT) 121 and a passive optical distribution network (Optical Distribution Network, ODN, not shown). The ONT 112 accesses the access network 120 from a user-network interface (User-Network Interface, UNI) side of the OLT 121. A network-network interface (Network-Network Interface, NNI) side of the OLT 121 is connected to a convergence device 131 in the metropolitan area network 130.

The metropolitan area network 130 mainly includes the convergence device 131 and a broadband network gateway (Broadband Network Gateway, BNG) 132. The convergence device 131 is configured to converge traffic from each OLT, and the BNG 132 serves as a service gateway to implement authentication, accounting, and broadband access session management for a broadband user. An NNI side of the BNG 132 is connected to the backbone network 140.

A UNI side of the backbone network 140 is connected to each metropolitan area network, and an NNI side is connected to the international (backbone) internet 150, or the IDC or the public cloud 160.

The IDC 160 may be a data center that supports an internet service, and includes a large quantity of internet service servers.

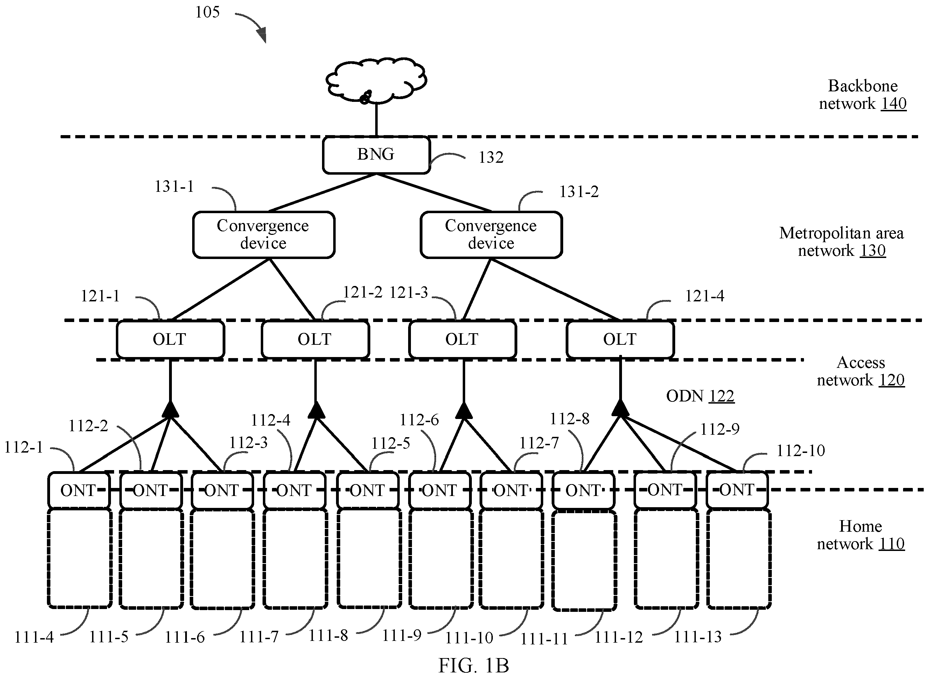

From another perspective, from the home network 110 to the BNG 132, devices are hierarchically converged to form a typical tree network, as shown in FIG. 1B.

FIG. 1B is a schematic block diagram of an existing tree network architecture 105 for bearing a broadband internet service. The network architecture 105 is similar to the network architecture 100, and a difference between the network architecture 105 and the network architecture 100 only lies in that: In the network architecture 105, a metropolitan area network 130 includes a plurality of convergence devices, namely, convergence devices 131-1 and 131-2; an access network 120 includes a plurality of OLTs, namely, OLTs 121-1 to 121-4, and includes an ODN 122; and a home network 110 includes a plurality of ONTs, namely, ONTs 112-1 to 112-10, and the ONTs 112-1 to 112-10 are respectively connected to user terminal devices 111-4 to 111-13.

## Conventional internet service model

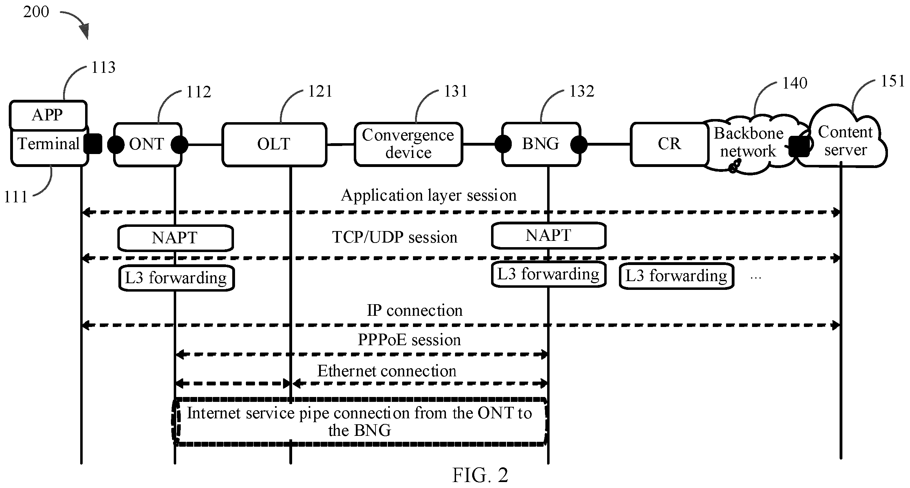

FIG. 2 is a schematic diagram of a conventional service model 200 of a broadband internet service. For ease of description, the following describes the service model 200 with reference to the network architecture 100 shown in FIG. 1A.

As shown in FIG. 2, the broadband internet service is a layered model. An application 113 may run on the user terminal device 111. An application layer session exists between the user terminal device 111 and a content server 151. The application layer session may include, for example, a hypertext transfer protocol (Hypertext Transfer Protocol, HTTP) session, a hypertext transfer protocol secure (HyperText Transfer Protocol Secure, HTTPS) session, and the like.

Several transmission control protocol (Transmission Control Protocol, TCP) sessions or user datagram protocol (User Datagram Protocol, UDP) sessions also exist between the user terminal device 111 and the content server 151. TCP may be for bearing the application layer session, such as an FTP/HTTP session, and the like. UDP is mainly for bearing video and protocol packets.

A network address and port translation (Network Address And Port Translation, NAPT) function may be deployed on the ONT 112. Optionally, the NAPT function may be deployed on the BNG 132, to implement translation between an internal network address and a public network address.

An internet protocol (Internet Protocol, IP) connection is also established between the user terminal device 111 and the content server 151, and a plurality of layer 3 (L3) forwarding function nodes are involved in the connection.

In FIG. 2, small black squares indicate IP main control (host) functions of the user terminal device 111 and the content server 151, black circles indicate L3 interface functions, and packet forwarding between L3 interfaces is an L3 forwarding function.

A 2.5 layer point-to-point protocol over Ethernet (Point-to-Point Protocol over Ethernet, PPPoE) session exists between an NNI side L3 interface on the ONT 112 and a UNI side L3 interface on the BNG 132. The PPPoE protocol is mainly used to implement user authentication and management of establishing and tearing down the PPPoE session.

The PPPoE session is born by a segment of Ethernet connection. Generally, a single-tagged virtual local area network (Virtual Local Area Network, VLAN) is used to encapsulate data on an Ethernet connection between the ONT 112 and the OLT 121. Generally, a dual-tagged VLAN is generally used to encapsulate data on an Ethernet connection between the OLT 121 and a UNI side interface on the BNG 132. The Ethernet connections at the ONT 112, the OLT 121, the convergence device 131, and the BNG 132 are represented as segmental connections or interface configuration, and are spliced together as an "internet service pipe from the ONT to the BNG" shown in FIG. 2.

The service model 200 is a hierarchical bearer system from bottom to top, and a bottom layer connection or session is a bearer layer of an upper layer session. If the bottom layer connection or session does not exist, the upper layer session cannot be created. The service pipe that is from the ONT 112 to the BNG 132 and that is at the bottom layer is a basis. If the service pipe is not configured, the upper layer Ethernet connection, PPPoE session, IP connection, transmission layer session, and application layer session cannot be created.

## Conventional connection and session creation

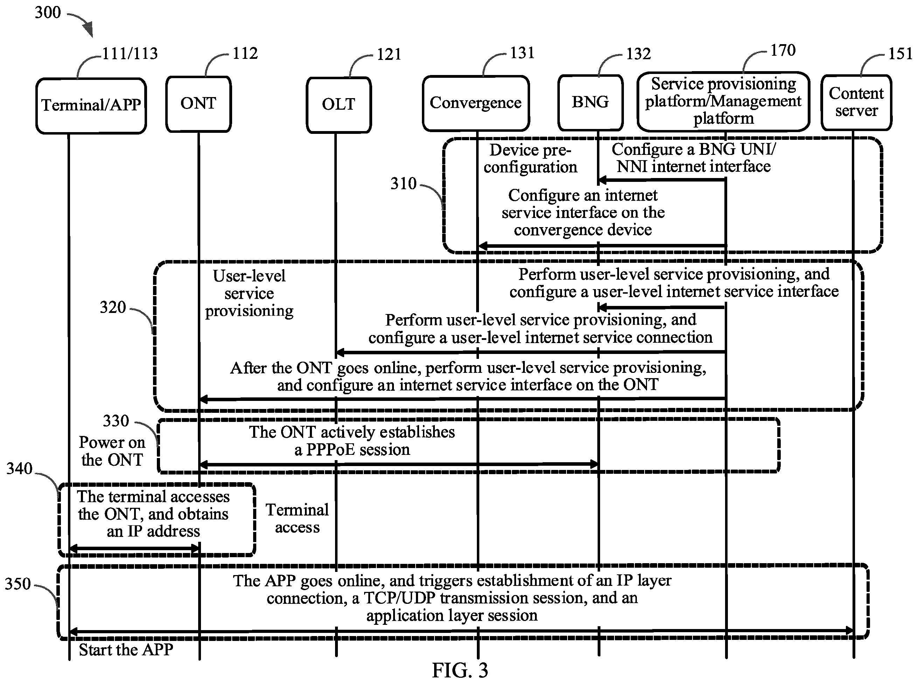

FIG. 3 shows a conventional connection and session creation process 300 of a service model of a broadband internet service. For ease of description, the following provides descriptions with reference to the network architecture 100 shown in FIG. 1A and the service model 200 shown in FIG. 2.

In FIG. 3, each dashed box indicates a subprocess (also referred to as a task).

A subprocess 310 relates to device pre-configuration, and is irrelevant to a user of the user terminal device 111. In the subprocess 310, after the BNG 132 is installed, a management platform 170 triggers configuration of a UNI/NNI side internet service interface on the BNG 132, so that the internet service interface on the BNG 132 may implement IP layer reachability with each server on an internet. In addition, the management platform 170 further configures an internet service interface on the convergence device 131.

After the user of the user terminal device 111 subscribes to the internet service, a service provisioning platform 170 performs a user-level service provisioning subprocess 320. In the user-level service provisioning subprocess 320, the service provisioning platform 170 configures the BNG 132, the OLT 121, and the ONT 112. Specifically, the service provisioning platform 170 configures a service connection, an Ethernet layer interface, and a PPPoE layer interface on each device, to enable a service connection, an Ethernet connection, and a PPPoE session from the ONT 112 to the OLT 121.

After the ONT 112 is powered on, the ONT 112 performs a subprocess 330. In the subprocess 330, the ONT 112 actively performs PPPoE dialing to establish a bottom layer PPPoE session of the internet service.

After the user terminal device 111 accesses the ONT 112, the user terminal device 111 performs a subprocess 340. In the subprocess 340, the user terminal device 111 obtains an IP address from the ONT 112, to implement IP layer reachability of the user terminal device 111 with each server.

When the application (APP) 113 on the user terminal device 111 is started, the APP 113 performs a subprocess 350. In the subprocess 350, the APP 113 triggers establishment of an IP layer connection, a TCP/UDP session, and an application layer session from the APP 113 to the content server 151.

## Conventional internet service pipe between the ONT and the BNG

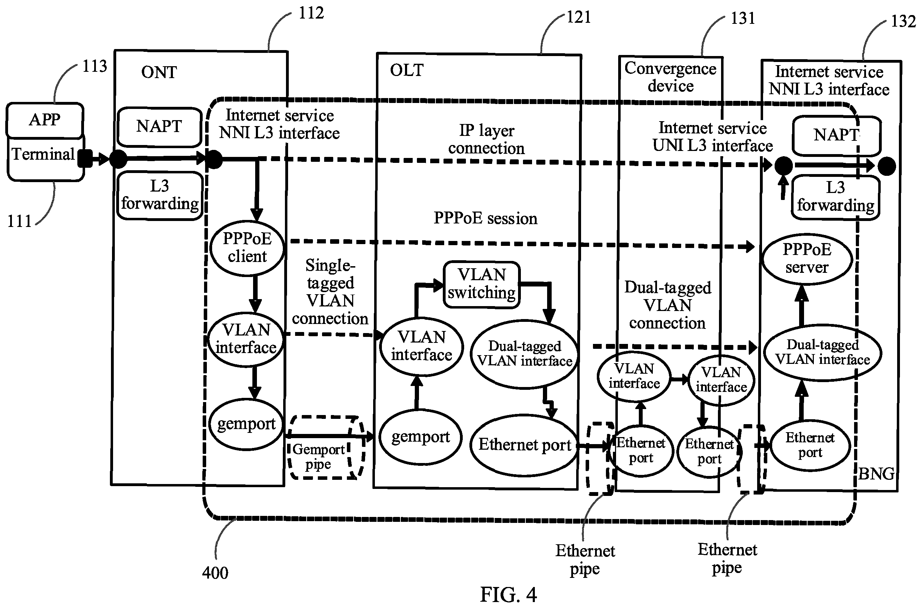

FIG. 4 is a detailed diagram of a conventional internet service pipe between the ONT and the BNG shown in FIG. 2. For ease of description, the following provides descriptions with reference to the network architecture 100 shown in FIG. 1A and the connection and session creation process 300 shown in FIG. 3.

As shown in FIG. 4, in the user-level service provisioning subprocess 320, interfaces and functions in a block 400 need to be configured (the interfaces are indicated by circles or ellipses, and the functions are indicated by rectangles).

Specifically, a bottom layer gigabit passive optical network encapsulation mode interface (GPON Encapsulation Mode Port, gemport) needs to be configured on the ONT 112, and includes a gemport identifier (gemport ID), an associated transmission container (transmission container, T-CONT) type, T-CONT bandwidth, and a T-CONT queue scheduling policy. Then, a VLAN interface (including a VLAN ID, an 802.1p value, and an associated gemport interface), a PPPoE client interface (a PPPoE account name and password, and an associated VLAN interface), and an internet service NNI L3 interface (an IP address obtaining manner, an IP layer differentiated services code point (Differentiated Services Code Point, DSCP) value, and an associated L3 interface) that are on the ONT 112 are configured.

A UNI side gemport interface (an ONT ID, and a gemport ID), a VLAN interface (a VLAN ID, and an associated gemport interface) on the gemport interface, a network side dual-tagged VLAN interface (an outer VLAN ID, an inner ID, and an associated physical Ethernet interface), and a VLAN switching function (a UNI side single-tagged VLAN interface, an NNI side dual-tagged VLAN interface, and an 802.1P processing policy) needs to be configured on the OLT 121.

Configuration on the convergence device 131 is configuration irrelevant to a single user. UNI side and NNI side VLAN interfaces of the convergence device 131 bear internet services of all users, and are already configured on the convergence device 131 in the device pre-configuration subprocess 310. Therefore, this does not belong to configuration of the internet service pipe between the ONT and the BNG.

A dual-tagged VLAN interface (an outer VLAN ID, an inner VLAN ID, and an 802.1p processing policy), and a PPPoE server interface (an authentication, authorization, and accounting (Authentication, Authorization, and Accounting, AAA) policy, maximum and assured bandwidth, and an associated dual-tagged VLAN interface) needs to be configured on the BNG 132. The configuration is delivered to the BNG 132, the OLT 121, and the ONT 112 in the user-level service provisioning subprocess 320. If the configuration is correct, a VLAN layer connection may be enabled. After the ONT 112 is powered on, the PPPoE dialing is triggered, and the PPPoE session is created based on the VLAN connection.

It may be understood based on the foregoing descriptions with reference to FIG. 2 to FIG. 4 that, in the existing solution, the internet service pipe between the ONT and the BNG is specific to the user of the user terminal device that accesses the ONT. That is, traffic of applications on the user terminal device of the user is born in one service pipe. The applications on the user terminal device are not finely classified. The ONT, the OLT, and the BNG do not sense the applications, and do not perform differentiated processing on the applications. However, an end user may want to provide some better assurance for one or more specific applications.

In view of this, embodiments of this disclosure provide an improved communication solution. In this solution, a network management device creates, based on an identifier of an application that the user terminal device requests to access and an identifier of an access side device, a service pipe between the user terminal device and an optical edge device, creates mapping between the application and the service pipe, and further sends, to the access side device, information about the mapping, to enable service data associated with the application to be transmitted through the service pipe. In this solution, the service pipe specific to the application is created, to enable the service data associated with the application to be transmitted through the service pipe. In this manner, the applications are treated differently, so that user experience is improved.

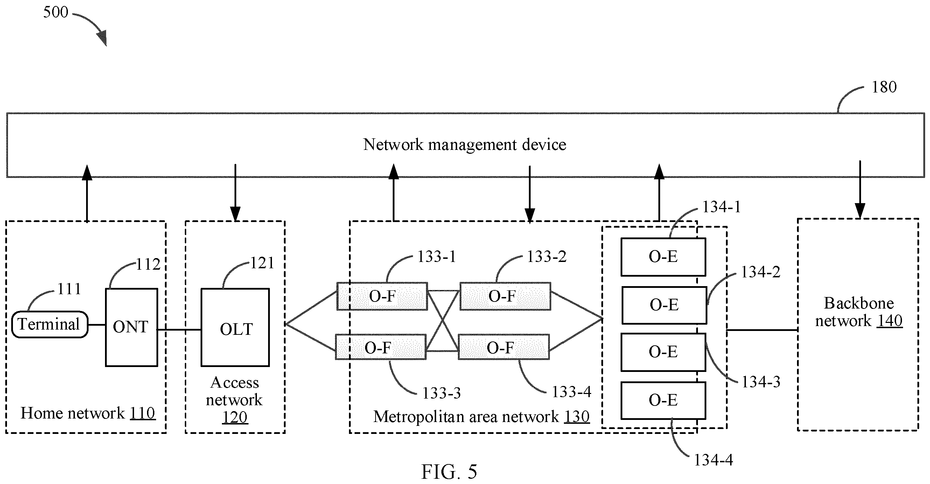

Embodiments of this disclosure are described in more detail in the following with reference to FIG. 5 to FIG. 12.

## Network architecture in this disclosure

FIG. 5 is a schematic block diagram of an example network architecture 500 in which embodiments of this disclosure can be implemented. As shown in the figure, the network architecture 500 is similar to the network architecture 100. A difference between the network architecture 500 and the network architecture 100 lies in that both an access network 120 and a metropolitan area network 130 use a Fabric (optical fiberization) architecture. In the Fabric architecture, the convergence device 131 in the metropolitan area network 130 shown in FIG. 1A is replaced by optical-fabric (optical-fabric, O-F) devices 133-1 to 133-4 shown in FIG. 5, and the BNG 132 in the metropolitan area network 130 shown in FIG. 1A is replaced by optical-edge (optical-edge, O-E) devices 134-1 to 134-4 shown in FIG. 5. In the following, for ease of description, the O-F devices 133-1 to 133-4 are collectively referred to as an O-F device 133, and the O-E devices 134-1 to 134-4 are collectively referred to as an O-E device 134. The O-E device 134 serves not only a broadband home user, but also mobile backhaul, layer 2 (L2)/layer 3 (L3) networking, a cloud access private line, and a layer 1 (L1) transmission private line. The O-E devices 134-1 to 134-4 are deployed in a pooling manner, to form an O-E device shared pool.

A difference between the network architecture 500 and the network architecture 100 further lies in that an ONT 112 or an OLT 121 can detect whether an application is online. In the following, the ONT and the OLT are also collectively referred to as an access side device. If it is detected that the application goes online, the access side device determines whether a service pipe between a user terminal device 111 and the O-E device 134 is created. If it is determined that the service pipe is not created, the access side device sends, to a network management device 180, a first request message for creating the service pipe, where the first request message includes an identifier of the application that the user terminal device 111 requests to access and an identifier of the access side device.

In addition, a difference between the network architecture 500 and the network architecture 100 further lies in that the network architecture 500 further includes the network management device 180. The network management device 180 receives, from the access side device (for example, the ONT 112 or the OLT 121), the first request message for creating the service pipe. The first request message includes the identifier of the application that the user terminal device 111 requests to access and the identifier of the access side device. The network management device 180 determines the O-E device based on the identifier of the application and the identifier of the access side device, to further create the service pipe between the user terminal device and the O-E device. Further, the network management device creates mapping between the application and the service pipe, and sends, to the access side device, information about the mapping, to enable service data associated with the application to be transmitted through the service pipe. Because all service data associated with the application is transmitted through the service pipe, the service pipe is also referred to as an application-level service pipe in the following.

In some embodiments, the network management device 180 may select a bearer tunnel for bearing the service pipe.

In some embodiments, the network management device 180 may send configuration information of the service pipe to the ONT 112 and the OLT 121, to configure the service pipe on the ONT 112 and the OLT 121. In addition, the network management device 180 may further send configuration information of the bearer tunnel to the OLT 121 and the O-E device 134, to configure the bearer tunnel on the OLT 121 and the O-E device 134.

It should be understood that quantities of user terminal devices, ONTs, OLTs, O-F devices, and O-E devices shown in FIG. 5 are merely examples. The network architecture 500 may include more or fewer user terminal devices, ONTs, OLTs, O-F devices, and O-E devices. This is not limited in this embodiment of this disclosure. In an example, in some embodiments, the network architecture 500 may include a plurality of different types of user terminal devices, for example, a mobile phone, a tablet computer, a personal computer, a smart TV, and the like.

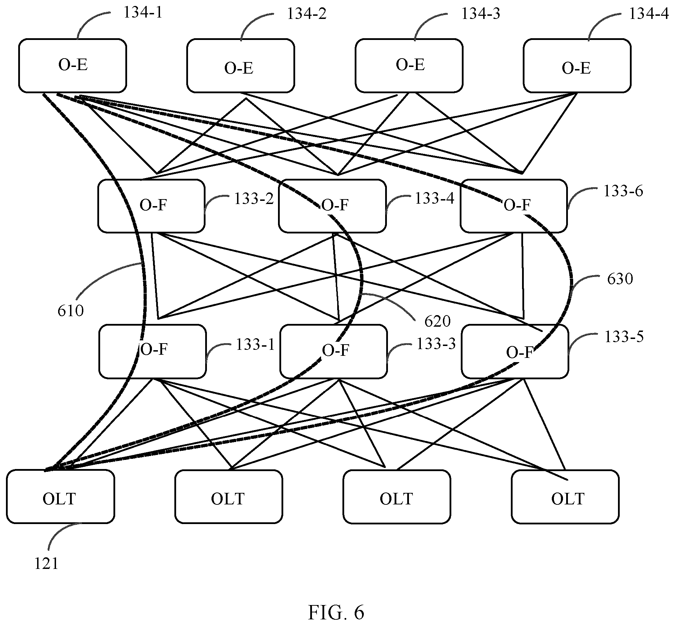

In some embodiments, in the network architecture 500, a plurality of bearer tunnels may exist between any OLT 121 and any O-E device 134. This will be described below with reference to FIG. 6.

## Bearer tunnel in this disclosure

FIG. 6 is a schematic diagram of a bearer tunnel according to some embodiments of this disclosure. As shown in FIG. 6, there are three bearer tunnels between an OLT 121 and an O-E device 134-1. A bearer tunnel 610 is from the OLT 121 to the O-E device 134-1 via OF devices 133-1 and 133-2. A bearer tunnel 620 is from the OLT 121 to the O-E device 134-1 via O-F devices 133-3 and 133-4. A bearer tunnel 630 is from the OLT 121 to the O-E device 134-1 via O-F devices 133-5 and 133-6. The bearer tunnels 610, 620, and 630 may respectively bear traffic from three different ONTs.

In some embodiments, the OLT 121, an O-F device 133, and an O-E device 134 can support a plurality of tunneling technologies, including but not limited to: a tunnel that supports a segment routing IPv6-traffic engineering (Segment Routing IPv6-Traffic Engineering, SRv6-TE) tunnel, a tunnel that supports only segment routing IPv6-besteffort (Segment Routing IPv6-besteffort, SRv6-BE) tunnel, and an optical service unit (Optical Service Unit, OSU). The SRv6-TE tunnel can accurately control a path, but the SRv6-BE tunnel cannot accurately control a path. The OSU is a smallest bearer granularity in an OTN network. The plurality of tunneling technologies may provide different service level agreements (Service Level Agreement, SLA) levels with reference to a plurality of paths.

## Creation of a service pipe in this disclosure

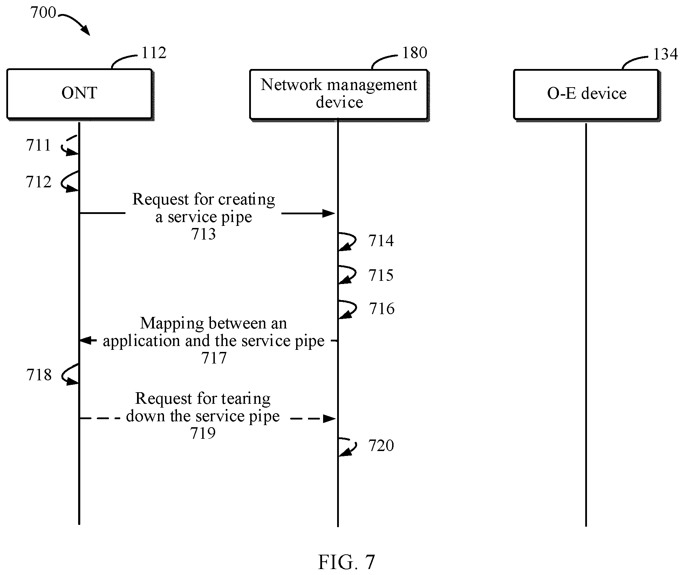

FIG. 7 is a diagram of signaling interworking in an example process 700 for creating a service pipe according to an embodiment of this disclosure. For an objective of discussion, the example process 700 is described with reference to the various elements shown in FIG. 5. However, it should be understood that the example process 700 may alternatively be performed between a network management device and an access side device in any other communication scenario. In addition, for the objective of discussion, an example in which an access side device is implemented by an ONT 112 is used for description below. However, it may be understood that, in another embodiment, the access side device may alternatively be implemented by an OLT 121, and the scope of this disclosure is not limited in this aspect.

As shown in FIG. 7, after receiving a user request message for accessing an application from a user terminal device 111, the ONT 112 determines (712) whether a service pipe between the user terminal device 111 and an O-E device 134 is created. If it is determined that the service pipe is not created, the ONT 112 sends (713), to a network management device 180, a first request message for creating the service pipe. Correspondingly, the network management device 180 receives, from the ONT 112, the first request message for creating the service pipe. The first request message includes an identifier of the application that the user terminal device 111 requests to access and an identifier of the access side device.

In some embodiments, optionally, the ONT 112 may determine (711), based on the identifier of the application, a service pipe policy associated with the application. If the service pipe policy indicates that service data associated with the application is transmitted through the service pipe, the ONT 112 further determines whether the service pipe is created. The following provides descriptions with reference to a specific example.

After one application goes online, one or more communication sessions associated with the application are initialized. The communication session may include at least one of a TCP session and a UDP session. The ONT 112 may identify, based on these communication sessions, an application subcategory and an application category to which the application belongs. For example, an example of the application subcategory may include but is not limited to TikTok, Tencent Video, WeChat, Arena of Valor, and the like. An example of the application category may include but is not limited to an OTT (Over The Top) video, WEB browsing, a mobile game, and the like.

In this example, the ONT 112 may search an application marking table by using the application subcategory and the application category as keywords, to determine the identifier of the application. The application marking table may be created by the network management device 180 and sent to the ONT 112. Table 1 shows an example of the "application marking table".

**Table 1 Application marking table**

| Keyword | | Search result |
|---|---|---|
| Application category | Application subcategory | Identifier of the application |
| WEB browsing | ... | 1 |
| FTP download | ... | 2 |
| Mobile game | Arena of Valor | 3 |
| Video | TikTok | 4 |
| Others | Others | 999 |

For example, assuming that a subcategory of an application is "Arena of Valor", an identifier of the application may be 3. If an application is not a specific application shown in the application marking table, in other words, both an application category and an application subcategory to which the application belongs are "other", an identifier of the application is 999.

After the identifier of the application is determined, the ONT 112 may search, by using the identifier of the application as a keyword, an "application policy and status table" for the service pipe policy associated with the application. Table 2 shows an example of the "application policy and status table".

**Table 2 Application policy and status table**

| Keyword | Search result | | | |
|---|---|---|---|---|
| Identifier of the application | Service pipe policy | ID of a current service pipe | Communication session list | Status of the application |
| 1 | Independent application-level service pipe | 10 | TCP session 1 TCP session 2 | Valid |
| 2 | Independent application-level service pipe | 11 | TCP session 3 TCP session 5 | Valid |
| 3 | Independent application-level service pipe | The application-level service pipe is not created, and the network management device is to be requested to create the application-level service pipe. | UDP session 1 | Valid |
| 4 | Use a user-level service pipe | 0 | TCP session 4 TCP session 6 UDP session 2 | Valid |
| 5 | Use a user-level service pipe | 0 | None | Invalid |
| 999 | Use a user-level service pipe | 0 | ... | Valid |

As shown in the "application policy and status table", if the identifier of the application is 1, the ONT 112 may determine that the service pipe policy associated with the application is the "independent application-level service pipe", and a service pipe (also referred to as a service pipe 10) whose identifier (ID) is 10 is created for the application. In this case, the ONT 112 may update a communication session list associated with the application, refresh one or more newly added communication sessions to the communication session list, configure, in a forwarding table, a communication session associated with the application, and map the newly added communication session to the application-level service pipe 10.

If the identifier of the application is 3, the ONT 112 may determine that the service pipe policy associated with the application is the "independent application-level service pipe", but the corresponding application-level service pipe has not been created currently. In this case, the ONT 112 may send, to the network management device 180, the first request message for creating the service pipe. The first request message may include the identifier of the application and the ID of the ONT 112. In addition, the ONT 112 may update, based on a newly added communication session associated with the application, a communication session list associated with the application. In addition, the ONT 112 may further update the status of the application in the application policy and status table to valid (that is, in use). It may be understood that, when all communication sessions associated with an application are deleted, the ONT 112 may update a status of the application to invalid.

If the identifier of the application is 4, 5, or 999, the ONT 112 may determine that the service pipe policy associated with the application is to "use the user-level service pipe" (which is described in detail in the following), and an identifier of the corresponding service pipe is 0. The ONT 112 may update a communication session list associated with the application, refresh one or more newly added communication sessions to the communication session list, configure, in a forwarding table, a communication session associated with the application, and map the newly added communication session to the service pipe 0.

Still refer to FIG. 7. After receiving the first request message for creating the service pipe, the network management device 180 determines (714) the O-E device 134 based on the identifier of the application and the identifier of the ONT 112 that are in the first request message.

In some embodiments, the network management device 180 may determine a plurality of candidate O-E devices based on the identifier of the application and the identifier of the ONT 112. Further, the network management device 180 may select one O-E device from the plurality of candidate O-E devices based on load statuses of the plurality of candidate O-E devices or historical statistics information of quality of service that is of the plurality of candidate O-E devices and that is for the application.

In an embodiment in which the network architecture shown in FIG. 5 is used, the network management device 180 may determine O-E devices 134-1 to 134-4 as candidate O-E devices based on the identifier of the application and the identifier of the ONT 112. Further, the network management device 180 may select one O-E device from the O-E devices 134-1 to 134-4 based on load statuses of the O-E devices 134-1 to 134-4 or historical statistics information of quality of service that is of the O-E devices 134-1 to 134-4 and that is for the application. In an example, the network management device 180 may search an "application-O-E selection policy table" based on the identifier of the application and the identifier of the ONT 112, to determine the plurality of candidate O-E devices and an O-E selection policy. Table 3 shows an example of the "application-O-E selection policy table".

### Table 3 Application-O-E selection policy table

| Keyword | | Search result | | |
|---|---|---|---|---|
| Identifier of the application | Identifier of the ONT | Identifier of the OLT | Candidate O-E device | O-E selection policy |
| 1 | 112 | 121 | O-E device 134-1 O-E device 134-2 | Historical statistics first |
| 2 | 112 | 121 | O-E device 134-1 O-E device 134-2 | Historical statistics first |
| 3 | 112 | 121 | O-E device 134-1 O-E device 134-2 | Historical statistics first |
| 4 | 112 | 121 | O-E device 134-1 O-E device 134-2 | Low load first |

For example, as shown in the "application-O-E selection policy table", if the identifier of the application is 3, the network management device 180 may search the "application-O-E selection policy table" by using the identifier "3" of the application as a keyword, to determine that the service pipe policy associated with the application is "historical statistics first". In other words, one O-E device is selected from the candidate O-E device 134-1 and O-E device 134-2 (for example, the O-E device 134-2 shown in FIG. 5) based on the historical statistics information.

Further, the network management device 180 may search an "application-O-E historical statistics table" by using, as keywords, the identifier of the application and an identifier of the candidate O-E device determined based on the "application-O-E selection policy table", to determine the historical statistics information of the quality of service that is of the candidate O-E devices and that is for the application. Table 4 shows an example of the "application-O-E historical statistics table".

**Table 4 Application-O-E historical statistics table**

| Keyword | | Search result | | |
|---|---|---|---|---|
| Identifier of the O-E device | Identifier of the application | Status | Average packet loss rate | Average delay |
| 134-1 | 3 | Available | 2E-7 | Approximately 110 ms |
| 134-2 | 3 | Available | 3E-4 | Approximately 150 ms |
| 134-1 | 1 | Unavailable | 10E-3 | Approximately 150 ms |

As shown in the "application-O-E historical statistics table", a historical average packet loss rate and a historical average delay that is of the O-E device 134-1 and that is for the application whose identifier is 3 are respectively 2E-7 and approximately 110 ms, and a historical average packet loss rate and a historical average delay that is of the O-E device 134-2 and that is for the application whose identifier is 3 are respectively 3E-4 and approximately 150 ms.

Further, the network management device 180 may search an "application parameter table" by using the identifier of the application as a keyword, to determine a quality of service requirement of the application. Table 5 shows an example of the "application parameter table".

**Table 5 Application parameter table**

| Keyword | Search result | | | | | |
|---|---|---|---|---|---|---|
| Identifier of the application | Delay requirement | Packet loss requirement | Bandwidth requirement | SLA level requirement | QoS profile | Domain name |
| 1 | <200 ms | 10E-4 | CIR=0 Mbit/s PIR=100 Mbit/s | 0 | 20 | @WEB |
| 2 | <100 ms | 10E-4 | CIR=10 Mbit/s PIR=100 Mbis/S | 0 | 21 | @FTP |
| 3 | <150 ms | 10E-5 | CIR=5 Mbit/s PIR=5 Mbit/s | 3 | 22 | @Arena of Valor |
| 4 | <100 ms | 10E-4 | CIR=50 Mbit/s PIR=100 Mbis/S | 2 | 23 | @TikTok |
| 999 | <200 ms | 10E-3 | CIR=0 Mbit/s PIR=100 Mbis/S | 0 | 0 | @else application (other applications) |

As shown in the "application parameter table", a delay requirement of the application whose identifier is 3 is "< 150 ms (in other words, less than 150 ms)". Because it may be determined, based on the "application-O-E historical statistics table", that a historical average delay that is of the O-E device 134-1 and that is for the application whose identifier is 3 is approximately 110 ms (<150 ms), the network management device 180 may select the candidate O-E device 134-1 to create the service pipe.

To enable the network management device 180 to obtain the historical statistics information of the quality of service that is of the plurality of candidate O-E devices and that is for the application, each of the plurality of candidate O-E devices may periodically collect statistics information of quality of service that is of each of the plurality of candidate O-E devices and that is for the application, and send the collected statistics information to the network management device 180. Correspondingly, the network management device 180 may periodically obtain, from the plurality of candidate O-E devices, the statistics information of the quality of service that is of the plurality of candidate O-E devices and that is for the application. Further, the network management device 180 may determine, based on the obtained statistics information, the historical statistics information of the quality of service that is of the plurality of candidate O-E devices and that is for the application.

In some embodiments, the network management device 180 may pre-create mapping between the identifier of the application and a domain name associated with the application. For example, in the foregoing "application parameter table", a domain name associated with the application whose identifier is 1 is @WEB, and a domain name associated with the application whose identifier is 3 is @Arena of Valor. After the mapping is created, the network management device 180 may send, to the O-E device 134, information about the mapping. Therefore, the O-E device 134 may identify the application based on the domain name associated with the application.

In some embodiments, the O-E device 134 may perform quality of service statistics collection based on the domain name associated with the application, periodically collect a delay, a packet loss rate, and the like of each TCP/UDP session associated with the application, and periodically summarize and report the delay, the packet loss rate, and the like to the network management device 180, to generate the foregoing "application-O-E historical statistics table" at the network management device 180.

For example, for a case in which the identifier of the application is 3, and the domain name is @Arena of Valor, each O-E device 134 has a UNI L3 interface, and accesses application-level service pipes of a plurality of ONTs from a UNI side. The pipes are identified by using dual-tagged VLAN IDs. The O-E device 134 may collect delays and packet loss rates of all TCP/UDP sessions on the UNI L3 interface once every second, then summarize a service pipe level and an application-level quality status (that is, an average delay and packet loss rate within 5 minutes or 15 minutes) at intervals of 5 minutes or 15 minutes, and report the service pipe-level and the application-level quality status to the network management device 180. In addition, each O-E device 134 may further report an identifier of a corresponding O-E device and a directed domain name and the statistics information to the network management device 180.

After receiving the statistics information reported by the O-E device 134, the network management device 180 may find, in the "application parameter table" based on the domain name, an identifier of an application corresponding to the domain name.

The network management device 180 may first summarize, by using a mathematical average method, the average packet loss rate and the average delay that is in 15 minutes and that are reported and summarized, to generate a 24-hour SLA statistics table. In addition, the network management device 180 may then summarize daily SLA statistics information by using the mathematical average method, to generate weekly average SLA statistics.

In some embodiments, the "application O-E historical statistics table" is updated by performing weighted average based on current historical statistics, SLA statistics in the last week, and SLA statistics in the last day. In other words, a historical average packet loss rate and a historical average delay may be respectively determined in the following manners:

application-O-E historical average packet loss rate=application-O-E historical average packet loss rate*70%+application-O-E average packet loss rate in the last week*20%+application-O-E average packet loss rate in the last day*10%;

and application-O-E historical average delay=application-O-E historical average delay*70%+application-O-E average delay in the last week*20%+application-O-E average delay in the last day*10%.

It should be understood that the foregoing is merely an example of determining the historical statistics information of the quality of service that is of the plurality of candidate O-E devices and that is for the application. Based on the obtained statistics information, the network management device 180 may determine the historical statistics information by using any appropriate method. The scope of this disclosure is not limited in this respect.

Still refer to FIG. 7. After determining the O-E device, the network management device 180 creates (715) the service pipe between the user terminal device 111 and the determined O-E device.

After creating the service pipe, the network management device 180 creates (716) mapping between the application and the service pipe. Further, the network management device 180 sends (717), to the ONT 112, information about the mapping, to enable the service data associated with the application to be transmitted through the service pipe.

Correspondingly, the ONT 112 receives, from the network management device 180, the information about the mapping between the application and the service pipe. Further, the ONT 112 enables (718), based on the information about the mapping between the application and the service pipe, the service data associated with the application to be transmitted through the service pipe.

In some embodiments, to enable the service data associated with the application to be transmitted through the created service pipe, the ONT 112 may configure, in the forwarding table, a communication session associated with the application, and map, to the service pipe, traffic associated with the communication session. For example, the ONT 112 may search, based on the identifier of the application, the "application policy and statustable" for a communication session list associated with the application. Further, the ONT 112 may configure the communication session list in the forwarding table, and map a communication session in the communication session list to the created service pipe.

In some embodiments, after creating the service pipe, the network management device 180 may obtain QoS parameters of each ONT 112, OLT 121, and O-E device 134 from the QoS (quality of service) profile in the "application parameter table", obtain, from the "application parameter table", the domain name associated with the application, and allocate parameters such as a VLAN ID, a gemport ID, and the like.

In some embodiments, in addition to sending, to the ONT 112, the information about the mapping between the application and the service pipe, the network management device 180 may further generate another parameter of a service pipe interface on the ONT 112, and send the parameter to the ONT 112. For example, the another parameter of the service pipe interface on the ONT 112 may include: a gemport ID, a T-CONT ID, a T-CONT type, T-CONT bandwidth, a single-tagged VLAN ID, an 802.1p and DSCP value, an L3 interface IP address obtaining manner, an IP address in a static address manner, a PPPoE account name, password, and domain name, a DHCPv4/v6 client parameter, and the like.

In some embodiments, the network management device 180 may further determine, based on an identifier of the O-E device 134, the identifier of the ONT 112, and quality of service needed by the application, a bearer tunnel for bearing the created service pipe. The network management device 180 may create mapping between the service pipe and the bearer tunnel. Further, the network management device 180 separately sends, to the OLT 121 and the O-E device 134, information about the mapping between the service pipe and the bearer tunnel. The following provides descriptions with reference to a specific example.

In this example, based on the "application-O-E selection policy table", the network management device 180 may determine that the identifier of the OLT accessed by the ONT 112 is 121. Based on the foregoing "application parameter table", the network management device 180 may determine that an SLA level associated with the application is 3. Further, the network management device 180 may search a "tunnel selection table" by using the identifier (121) of the OLT accessed by the ONT 112, the identifier (134-1) of the O-E device, and the SLA level associated with the application as keywords, to determine the bearer tunnel for bearing the created service pipe. Table 6 shows an example of the "tunnel selection table".

**Table 6 Tunnel selection table**

| Keyword | | | Search result |
|---|---|---|---|
| Identifier of the OLT | Identifier of the O-E device | SLA level | Tunnel |
| 121 | 134-1 | 0 | 1 |
| 121 | 134-1 | 1 | 10 |
| 121 | 134-1 | 2 | 11 |
| 121 | 134-1 | 3 | 12 |

As shown in the foregoing "tunnel selection table", if the identifier of the OLT accessed by the ONT 112 is 121, the identifier of the O-E device is 134-1, and the SLA level associated with the application is 3, the network management device 180 determines that the bearer tunnel for bearing the created service pipe is a tunnel 12.

In some embodiments, in addition to sending, to the OLT 121 and the O-E device 134, the information about the mapping between the service pipe and the bearer tunnel, the network management device 180 may further generate other parameters of a service pipe interface on the OLT 121 and a service pipe interface on the O-E device 134, and respectively send the parameters to the OLT 121 and the O-E device 134. For example, another parameter of the service pipe interface on the OLT 121 may include: an optical network terminal identifier ONT ID, a GEM port identifier gemport ID, a VLAN ID, a network-side virtual local area network identifier SVLAN ID, a customer-side virtual local area network identifier CVLAN ID, a network-side tag S-TAG default value and mapping policy, a network-side C-TAG default value and mapping policy, a bidirectional bandwidth speed limit requirement, and the like. Another parameter of the service pipe interface on the O-E device 134 may include: a domain name, an SVLAN ID, a CVLAN ID, an S-TAG default value and mapping policy in an NNI-to-UNI direction, a C-TAG default value and mapping policy in the NNI-to-UNI direction, and the like.

In some embodiments, if the ONT 112 detects that the application is offline, the ONT 112 may send, to the network management device 180, a second request message for tearing down the service pipe. In response to receiving the second request message, the network management device 180 may tear down the service pipe.

In some embodiments, the ONT 112 may not directly detect that the application is offline. On the contrary, if the ONT 112 detects that all communication sessions associated with the application have timed out and are deleted, and no new communication session is added within a time period, the ONT 112 may determine that the application is offline.

In some embodiments, as described above with reference to the "application policy and status table", if the identifier of the application is 4, 5, or 999, the ONT 112 may determine that the service pipe policy associated with the application is to "use the user-level service pipe". In this embodiment, after detecting that the ONT 112 is powered on, the OLT 121 may send, to the network management device 180, a third request message for creating the user-level service pipe, where the third request message includes the identifier of the ONT 112. After receiving the third request message, the network management device 180 determines one O-E device (also referred to as a second O-E device) from the plurality of candidate O-E devices based on the identifier of the ONT 112 and the load statuses of the plurality of candidate O-E devices. Further, the network management device 180 creates the user-level service pipe between the user terminal device 111 and the second O-E device, and creates mapping between a user of the user terminal device 111 and the user-level service pipe. Further, the network management device 180 sends, to the ONT 112, information about the mapping between the user and the user-level service pipe. After receiving the information, the ONT 112 enables, based on the information, service data associated with the user to be transmitted through the user-level service pipe. In this embodiment, after detecting that the ONT 112 is powered off, the OLT 121 may send, to the network management device 180, a request message for tearing down the user-level service pipe, where the request message includes the identifier of the ONT 112. After receiving the request message, the network management device 180 may tear down the user-level service pipe. In this way, the user-level service pipe is created when the ONT is powered on, and the user-level service pipe is torn down when the ONT is powered off, so that resources of the O-E device can be released, and the O-E devices are shared.

As described above, in some embodiments, the network architecture 500 may include a plurality of different types of user terminal devices, for example, a mobile phone, a tablet computer, a personal computer, a smart TV, and the like. In the conventional technology, traffic on the various types of user terminal devices is born in one service pipe, and differentiated processing on the user terminal devices is lacking. As a result, user experience is poor. To resolve this problem, in some embodiments, the network management device 180 may create, based on a fourth request message of an access side device accessed by the user terminal device, a service pipe specific to one user terminal device, to enable service data associated with the user terminal device to be transmitted through the service pipe. In this way, the differentiated processing on the user terminal devices can be implemented. Because all service data associated with the user terminal device is transmitted through the service pipe, the service pipe is also referred to as a terminal-level service pipe in the following.

In this embodiment, the ONT 112 may detect whether the user terminal device 111 accesses the ONT 112. If it is detected that the user terminal device 111 accesses the ONT 112, the ONT 112 sends, to the network management device 180, the fourth request message for creating the terminal-level service pipe, where the fourth request message includes an identifier of the user terminal device 111, a type of the user terminal device 111, and the identifier of the ONT 112. After receiving the fourth request message, the network management device 180 determines one O-E device (also referred to as a third O-E device) from the plurality of candidate O-E devices based on the identifier of the user terminal device 111, the type of the user terminal device 111, and the identifier of the ONT 112. Further, the network management device 180 creates the terminal-level service pipe between the user terminal device 111 and the third O-E device, and creates mapping between the user terminal device 111 and the terminal-level service pipe. Further, the network management device 180 sends, to the ONT 112, information about the mapping between the user terminal device 111 and the terminal-level service pipe. After receiving the information, the ONT 112 enables, based on the information, service data associated with the user terminal device 111 to be transmitted through the terminal-level service pipe. Because all service data associated with the application is transmitted through the service pipe, the service pipe is also referred to as an application-level service pipe in the following.

## Example implementation of a method for creating a service pipe in this disclosure

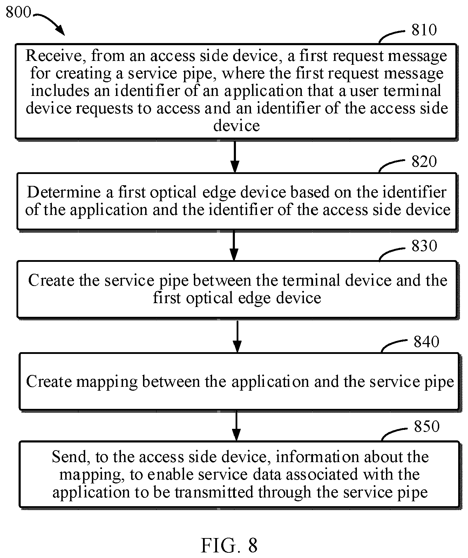

FIG. 8 is a flowchart of an example method 800 for creating a service pipe according to some embodiments of this disclosure. In some embodiments, the example method 800 may be implemented by a network management device. In an example, the network management device may be the network management device 180 in the example network architecture 500. In this example, the method 800 may be implemented by a processor or a processing unit of the network management device 180 together with another component (for example, a transceiver). In another embodiment, the example method 800 may alternatively be implemented by another electronic device independent of the example network architecture 500.

At a block 810, the network management device 180 receives, from an access side device, a first request message for creating the service pipe, where the first request message includes an identifier of an application that a user terminal device requests to access and an identifier of the access side device.

At a block 820, the network management device 180 determines a first optical edge device based on the identifier of the application and the identifier of the access side device.

At a block 830, the network management device 180 creates the service pipe between the user terminal device and the first optical edge device.

At a block 840, the network management device 180 creates mapping between the application and the service pipe.

At a block 850, the network management device 180 sends, to the access side device, information about the mapping, to enable service data associated with the application to be transmitted through the service pipe.

In some embodiments, the network management device 180 determines a plurality of candidate optical edge devices based on the identifier of the application and the identifier of the access side device. Further, the network management device 180 selects the first optical edge device from the plurality of candidate optical edge devices based on load statuses of the plurality of candidate optical edge devices or historical statistics information of quality of service that is of the plurality of candidate optical edge devices and that is for the application.

In some embodiments, additionally, the network management device 180 periodically obtains, from the plurality of candidate optical edge devices, statistics information of the quality of service that is of the plurality of candidate optical edge devices and that is for the application. Further, the network management device 180 determines the historical statistics information based on the obtained statistics information.

In some embodiments, additionally, the network management device 180 determines, based on an identifier of the first optical edge device, the identifier of the access side device, and quality of service needed by the application, a bearer tunnel for bearing the service pipe. Further, the network management device 180 creates mapping between the service pipe and the bearer tunnel. Further, the network management device 180 separately sends, to the access side device and the first optical edge device, information about the mapping between the service pipe and the bearer tunnel.

In some embodiments, additionally, the network management device 180 receives, from the access side device, a second request message for tearing down the service pipe. Further, the network management device 180 tears down the service pipe based on the second request message.

In some embodiments, the access side device includes an optical network terminal or an optical line termination.

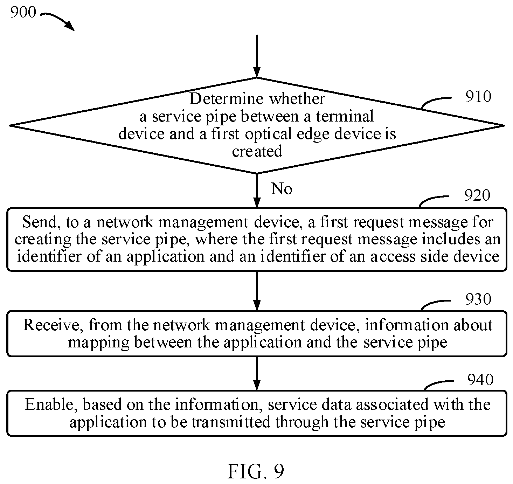

FIG. 9 is a flowchart of an example method 900 for creating a service pipe according to some other embodiments of this disclosure. In some embodiments, the example method 900 may be implemented by an access side device. In an example, the access side device may be the ONT 112 or the OLT 121 in the example network architecture 500. In this example, the method 900 may be implemented by a processor or a processing unit of the ONT 112 or the OLT 121 together with another component (for example, a transceiver). In another embodiment, the example method 900 may alternatively be implemented by another electronic device independent of the example network architecture 500.

At a block 910, after the access side device receives a user request message for accessing an application from a user terminal device, the access side device determines whether a service pipe between the user terminal device and a first optical edge device is created.

At a block 920, if it is determined that the service pipe is not created, the access side device sends, to a network management device, a first request message for creating the service pipe, where the first request message includes an identifier of the application and an identifier of the access side device.

At a block 930, the access side device receives, from the network management device, information about mapping between the application and the service pipe.

At a block 940, the access side device enables, based on the information about the mapping between the application and the service pipe, service data associated with the application to be transmitted through the service pipe.

In some embodiments, the access side device determines, based on the identifier of the application, a service pipe policy associated with the application. Further, the access side device determines, in response to that the service pipe policy indicates that the service data associated with the application is transmitted through the service pipe, whether the service pipe is created.

In some embodiments, additionally, if it is determined that the service pipe is not created, the access side device updates, based on a communication session associated with the application, a communication session list associated with the application, and updates a status of the application to valid.

In some embodiments, the access side device configures, in a forwarding table, a communication session associated with the application. Further, the access side device maps, to the service pipe, traffic associated with the communication session, to enable the service data associated with the application to be transmitted through the service pipe.

In some embodiments, additionally, the access side device sends, to the network management device in response to detecting that the application is offline, a second request message for tearing down the service pipe.

In some embodiments, the access side device includes an optical network terminal or an optical line termination.

## Example implementations of an apparatus and a device for creating a service pipe in this disclosure

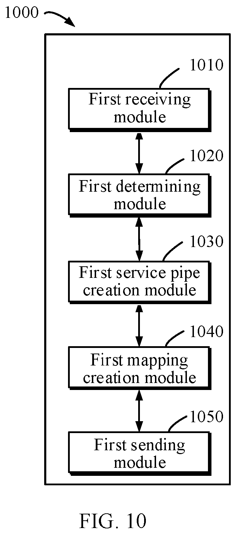

FIG. 10 is a schematic block diagram of an electronic apparatus 1000 suitable for implementing some embodiments of this disclosure. In some embodiments, the apparatus 1000 may be implemented as the network management device 180 or a part of the network management device 180 in FIG. 5. It should be understood that the apparatus 1000 may include more additional components than the shown components, or omit a part of the shown components. This is not limited in this embodiment of this disclosure.

As shown in the figure, the apparatus 1000 includes a first receiving module 1010, a first determining module 1020, a first service pipe creation module 1030, a first mapping creation module 1040, and a first sending module 1050.

The first receiving module 1010 is configured to receive, from an access side device, a first request message for creating a service pipe, where the first request message includes an identifier of an application that a user terminal device requests to access and an identifier of the access side device.

The first determining module 1020 is configured to determine a first optical edge device based on the identifier of the application and the identifier of the access side device.

The first service pipe creation module 1030 is configured to create the service pipe between the user terminal device and the first optical edge device.

The first mapping creation module 1040 is configured to create mapping between the application and the service pipe.

The first sending module 1050 is configured to send, to the access side device, information about the mapping, to enable service data associated with the application to be transmitted through the service pipe.

In some embodiments, the first determining module 1020 is further configured to: determine a plurality of candidate optical edge devices based on the identifier of the application and the identifier of the access side device, and select the first optical edge device from the plurality of candidate optical edge devices based on load statuses of the plurality of candidate optical edge devices or historical statistics information of quality of service that is of the plurality of candidate optical edge devices and that is for the application.

In some embodiments, the apparatus 1000 further includes a statistics information obtaining module, configured to periodically obtain, from the plurality of candidate optical edge devices, statistics information of the quality of service that is of the plurality of candidate optical edge devices and that is for the application. In this embodiment, the first determining module is further configured to determine the historical statistics information based on the obtained statistics information.

In some embodiments, the first determining module is further configured to determine, based on an identifier of the first optical edge device, the identifier of the access side device, and quality of service needed by the application, a bearer tunnel for bearing the service pipe. In this embodiment, the first mapping creation module is further configured to create mapping between the service pipe and the bearer tunnel. The first sending module is further configured to separately send, to the access side device and the first optical edge device, information about the mapping between the service pipe and the bearer tunnel.

In some embodiments, the first receiving module is further configured to receive, from the access side device, a second request message for tearing down the service pipe. In this embodiment, the apparatus 1000 further includes a tearing-down module, configured to tear down the service pipe based on the second request message.

In some embodiments, the access side device includes an optical network terminal or an optical line termination.

In some embodiments, the apparatus 1000 further includes a second receiving module, a second determining module, a second service pipe creation module, a second mapping creation module, and a second sending module. The second receiving module is configured to receive, from the access side device, a third request message for creating a user-level service pipe, where the third request message includes the identifier of the access side device. The second determining module is configured to determine a second optical edge device based on the identifier of the access side device and load statuses of a plurality of candidate optical edge devices. The second service pipe creation module is configured to create the user-level service pipe between the user terminal device and the second optical edge device. The second mapping creation module is configured to create mapping between a user of the user terminal device and the user-level service pipe. The second sending module is configured to send, to the access side device, information about the mapping between the user and the user-level service pipe, to enable service data associated with the user to be transmitted through the user-level service pipe.

In some embodiments, the apparatus 1000 further includes a third receiving module, a third determining module, a third service pipe creation module, a third mapping creation module, and a third sending module. The third receiving module is configured to receive, from the access side device, a fourth request message for creating a terminal-level service pipe. The fourth request message includes an identifier of the user terminal device, a type of the user terminal device, and the identifier of the access side device. The third determining module is configured to determine a third optical edge device based on the identifier of the user terminal device, the type of the user terminal device, and the identifier of the access side device. The third service pipe creation module is configured to create the terminal-level service pipe between the user terminal device and the third optical edge device. The third mapping creation module is configured to create mapping between the user terminal device and the terminal-level service pipe. The third sending module is configured to send, to the access side device, information about the mapping between the user terminal device and the terminal-level service pipe, to enable service data associated with the user terminal device to be transmitted through the terminal-level service pipe.

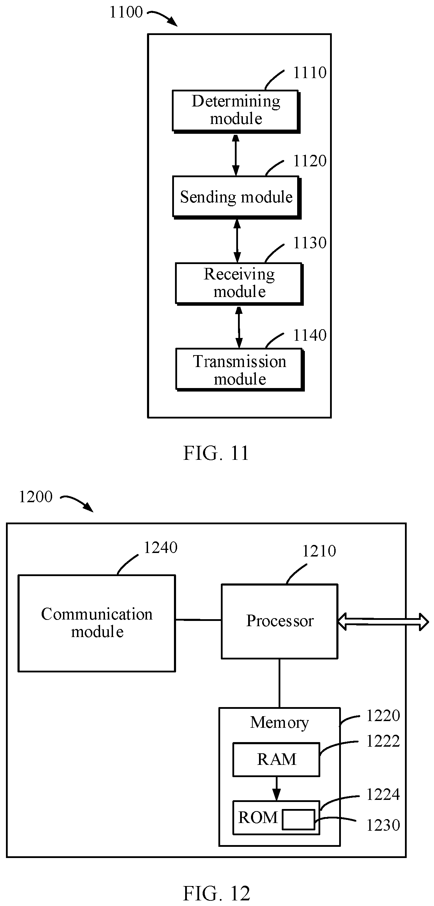

FIG. 11 is a schematic block diagram of an electronic apparatus 1100 suitable for implementing some other embodiments of this disclosure. In some embodiments, the apparatus 1100 may be implemented as the ONT 112 or the OLT 121 in FIG. 5. In some other embodiments, the apparatus 1100 may be implemented as a part of the ONT 112 or a part of the OLT 121 in FIG. 5. It should be understood that the apparatus 1100 may include more additional components than the shown components, or omit a part of the shown components. This is not limited in this embodiment of this disclosure.

As shown in the figure, the apparatus 1100 includes a determining module 1110, a sending module 1120, a receiving module 1130, and a transmission module 1140.

The determining module 1110 is configured to: after an access side device receives a user request message for accessing an application from a user terminal device, determine whether a service pipe between the user terminal device and a first optical edge device is created. The sending module 1120 is configured to: if it is determined that the service pipe is not created, send, to a network management device 180, a request for creating the service pipe, where the request includes an identifier of the application and an identifier of the ONT 112. The receiving module 1130 is configured to receive, from the network management device 180, information about mapping between the application and the service pipe. The transmission module 1140 is configured to enable, based on the information, service data associated with the application to be transmitted through the service pipe.

In some embodiments, the determining module 1110 is further configured to: determine, based on the identifier of the application, a service pipe policy associated with the application; and determine, in response to that the service pipe policy indicates that the service data associated with the application is transmitted through the service pipe, whether the service pipe is created.

In some embodiments, the apparatus 1100 further includes an updating module. The updating module is configured to: if it is determined that the service pipe is not created, update, based on a communication session associated with the application, a communication session list associated with the application, and update a status of the application to valid.

In some embodiments, the transmission module 1140 is further configured to: configure, in a forwarding table, a communication session associated with the application; and map, to the service pipe, traffic associated with the communication session.

In some embodiments, the sending module 1120 is further configured to send, to the network management device in response to detecting that the application is offline, a second request message for tearing down the service pipe.

In some embodiments, the sending module 1120 is further configured to: if the access side device is powered on, send, to the network management device, a third request message for creating a user-level service pipe, where the third request message includes an identifier of the access side device. In this embodiment, the receiving module 1130 is further configured to receive, from the network management device, information about mapping between a user of the user terminal device and the user-level service pipe. In this embodiment, the transmission module 1140 is further configured to enable, based on the information about the mapping between the user and the user-level service pipe, service data associated with the user to be transmitted through the user-level service pipe.

In some embodiments, the sending module 1120 is further configured to: if it is detected that the user terminal device accesses the access side device, send, to the network management device, a fourth request message for creating a terminal-level service pipe, where the fourth request message includes an identifier of the user terminal device and an identifier of the access side device. In this embodiment, the receiving module 1130 is further configured to receive, from the network management device, information about mapping between the user terminal device and the terminal-level service pipe. In this embodiment, the transmission module 1140 is further configured to enable, based on the information about the mapping between the user terminal device and the terminal-level service pipe, service data associated with the user terminal device to be transmitted through the terminal-level service pipe.

FIG. 12 is a simplified block diagram of an electronic device 1200 suitable for implementing an embodiment of this disclosure. The device 1200 may be implemented as a network management device, for example, the network management device 180 shown in FIG. 5. In addition, the device 1200 may alternatively be implemented as an access side device, for example, the ONT 112 or the OLT 121 shown in FIG. 5. As shown in the figure, the device 1200 includes one or more processors 1210, one or more memories 1220 coupled to the processors 1210, and one or more communication modules 1240 coupled to the processors 1210.

The communication module 1240 is configured to perform bidirectional communication. The communication module 1240 has a communication interface to facilitate communication. The communication interface may represent any interface needed to communicate with another network element.

The processor 1210 may be any type suitable for a local technical network, and may include, as a non-limiting example, one or more of the following: a general-purpose computer, a dedicated computer, a microprocessor, a digital signal processor, and a processor that is based on a multi-core processor architecture. The device 1200 may have a plurality of processors, such as an application-specific integrated circuit chip, which in time belongs to a clock synchronized with a main processor.

The memory 1220 may include one or more nonvolatile memories and one or more volatile memories. Examples of the nonvolatile memory include, but are not limited to, a read-only memory (ROM) 1224, an electrically programmable read-only memory (EPROM), a flash memory, a hard disk, a compact disc (CD), a digital video disc (DVD), and another magnetic storage and/or optical storage apparatus. Examples of the volatile memory include, but are not limited to, a random access memory (RAM) 1222 and another volatile memory that does not persist during power outage duration.

A computer program 1230 includes computer-executable instructions executed by an associated processor 1210. The program 1230 may be stored in the ROM 1224. The processor 1210 may perform any appropriate action and processing by loading the program 1230 into the RAM 1222.

Embodiments of this disclosure may be implemented by using the computer program 1230, so that the device 1200 may perform any processing of this disclosure as described with reference to FIG. 1 to FIG. 11. Embodiments of this disclosure may alternatively be implemented by using hardware or a combination of software and hardware.

In some embodiments, the program 1230 may be tangibly included in a computer-readable medium, and the computer-readable medium may be included in the device 1200 (for example, in the memory 1220) or another storage device that may be accessed by the device 1200. The program 1230 may be loaded from the computer-readable medium into the RAM 1222 for execution. The computer-readable medium may include any type of tangible nonvolatile memory, for example, an ROM, an EPROM, a flash memory, a hard disk, a CD, or a DVD.

Generally, various example embodiments of this disclosure may be implemented in hardware or a dedicated circuit, software, logic, or any combination thereof. Some aspects may be implemented in the hardware, while another aspect may be implemented in firmware or software that may be executed by a controller, a microprocessor, or another computing device. When various aspects of embodiments of this disclosure are illustrated or described as block diagrams, flowcharts, or using some other graphical representation, it is understood that the blocks, apparatuses, systems, technologies, or methods described herein may be implemented as non-limiting examples in hardware, software, firmware, dedicated circuits or logic, general-purpose hardware or controllers, or other computing devices, or some combination thereof. Examples of hardware devices that may be used to implement embodiments of this disclosure include but are not limited to a field programmable gate array (FPGA), an application-specific integrated circuit (ASIC), an application-specific standard product (ASSP), a system-on-a-chip (SoC), a complex programmable logic device (CPLD), and the like.

In an example, embodiments of this disclosure may be described in a context of machine-executable instructions. The machine-executable instructions are, for example, included in program modules executed in a device of a target real or virtual processor. Generally, the program module includes a routine, a program, a library, an object, a class, a component, a data structure, and the like, and performs a specific task or implements a specific abstract data structure. In various embodiments, functions of the program modules may be combined or split between the described program modules. The machine-executable instructions for the program module may be executed locally or in a distributed device. In the distributed device, the program module may be located in both a local storage medium and a remote storage medium.

Computer program code for implementing the method disclosed in this disclosure may be written in one or more programming languages. The computer program code may be provided for a processor of a general-purpose computer, a dedicated computer, or another programmable data processing apparatus, so that when the program code is executed by a computer or the another programmable data processing apparatus, the function/operation specified in the flowchart and/or block diagram is implemented. The program code may be executed entirely on the computer, partly on the computer, as a standalone software package, partly on the computer and partly on a remote computer, or entirely on a remote computer or a server.

In a context of this disclosure, the computer program code or related data may be born in any appropriate bearer, so that the device, the apparatus, or the processor can perform various processing and operations described above. Examples of the bearer include a signal, a computer-readable medium, and the like.

Examples of the signal may include an electrical signal, an optical signal, a radio signal, a voice signal, or another form of a propagated signal, such as a carrier wave and an infrared signal.

A machine-readable medium may be any tangible medium that includes or stores a program for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

In addition, although the operations are described in a particular order, this should not be understood as requiring the operations to be completed in the particular order shown or in a sequential order, or performing all of the illustrated operations to obtain a desired result. In some cases, multitasking or parallel processing is beneficial. Some features described in a context of separate embodiments in this specification may alternatively be integrated and implemented in a single embodiment. Conversely, various features described in a context of the single embodiment may alternatively be implemented separately in a plurality of embodiments or in any appropriate sub-combination.

The extent of protection conferred is determined by the claims (interpreted with the help of the description and the drawings).

**Claims**

1. An optical communication method, comprising:

   receiving (713, 810), by a network management device (180) from an access side device, a first request message for creating a service pipe (0, 10), wherein the first request message comprises an identifier (1, 121, 134) of an application (113) that a user terminal device (4, 111) requests to access and an identifier (1, 121, 134) of the access side device;
   determining (820), by the network management device (180), a first optical edge device based on the identifier (1, 121, 134) of the application (113) and the identifier (1, 121, 134) of the access side device;
   creating (830), by the network management device (180), the service pipe (0, 10) between the access side device and the first optical edge device;
   creating (717, 840), by the network management device (180), mapping between the application (113) and the service pipe (0, 10); and
   sending (850), by the network management device (180) to the access side device, information about the mapping, to enable service data associated with the application (113) to be transmitted through the service pipe (0, 10).

2. The method (800, 900) according to claim 1, wherein the creating (830) the service pipe (0, 10) comprises:

   determining (820), by the network management device (180), a plurality of candidate optical edge devices based on the identifier (1, 121, 134) of the application (113) and the identifier (1, 121, 134) of the access side device; and
   selecting, by the network management device (180), the first optical edge device from the plurality of candidate optical edge devices based on load statuses of the plurality of candidate optical edge devices or historical statistics information of quality of service that is of the plurality of candidate optical edge devices and that is for the application (113).

3. The method (800, 900) according to claim 2, further comprising:

   periodically obtaining, by the network management device (180) from the plurality of candidate optical edge devices, statistics information of the quality of service that is of the plurality of candidate optical edge devices and that is for the application (113); and
   determining, by the network management device (180), the historical statistics information based on the obtained statistics information.

4. The method (800, 900) according to claim 1, further comprising:

   determining, by the network management device (180) based on an identifier (1, 121, 134) of the first optical edge device, the identifier (1, 121, 134) of the access side device, and quality of service needed by the application (113), a bearer tunnel (610, 620, 630) for bearing the service pipe (0, 10);
   creating, by the network management device (180), mapping between the service pipe (0, 10) and the bearer tunnel (610, 620, 630); and
   separately sending, by the network management device (180) to the access side device and the first optical edge device, information about the mapping between the service pipe (0, 10) and the bearer tunnel (610, 620, 630).

5. The method (800, 900) according to claim 1, further comprising:

   receiving, by the network management device (180) from the access side device, a second request message for tearing down the service pipe (0, 10); and
   tearing down, by the network management device (180), the service pipe (0, 10) based on the second request message.

6. The method (800, 900) according to claim 1, wherein the access side device comprises an optical network terminal or an optical line termination.

7. An optical communication method, comprising:

   after an access side device receives a user request message for accessing an application (113) from a user terminal device (4, 111), determining (910), by the access side device, whether a service pipe (0, 10) between the user terminal device (4, 111) and a first optical edge device is created;

if it is determined that the service pipe (0, 10) is not created, sending, by the access side device to a network management device (180), a first request message for creating the service pipe (0, 10), wherein the first request message comprises an identifier (1, 121, 134) of the application (113) and an identifier (1, 121, 134) of the access side device;

receiving (930), by the access side device from the network management device (180), information about mapping between the application (113) and the service pipe (0, 10); and

enabling (940), by the access side device based on the information, service data associated with the application (113) to be transmitted through the service pipe (0, 10).

8. The method (800, 900) according to claim 7, wherein the determining whether a service pipe (0, 10) is created comprises:

determining, by the access side device based on the identifier (1, 121, 134) of the application (113), a service pipe policy associated with the application (113); and

determining, by the access side device in response to that the service pipe policy indicates that the service data associated with the application (113) is transmitted through the service pipe (0, 10), whether the service pipe (0, 10) is created.

9. The method (800, 900) according to claim 8, further comprising:

if it is determined that the service pipe (0, 10) is not created,

updating, by the access side device based on a communication session associated with the application (113), a communication session list associated with the application (113); and

updating a status of the application (113) to valid.

10. The method (800, 900) according to claim 7, wherein the enabling service data associated with the application (113) to be transmitted through the service pipe (0, 10) comprises:

configuring, by the access side device in a forwarding table, a communication session associated with the application (113); and

mapping, by the access side device to the service pipe (0, 10), traffic associated with the communication session.

11. The method (800, 900) according to claim 7, further comprising:

sending, by the access side device to the network management device (180) in response to detecting that the application (113) is offline, a second request message for tearing down the service pipe (0, 10).

12. The method (800, 900) according to claim 7, wherein the access side device comprises an optical network terminal or an optical line termination.

13. A network management device (180) of an optical communication network, wherein the network management device (180) comprises:

a first receiving module (1010), configured to receive, from an access side device, a first request message for creating a service pipe (0, 10), wherein the first request message comprises an identifier (1, 121, 134) of an application (113) that a user terminal device (4, 111) requests to access and an identifier (1, 121, 134) of the access side device;

a first determining module (1020), configured to determine a first optical edge device based on the identifier (1, 121, 134) of the application (113) and the identifier (1, 121, 134) of the access side device;

a first service pipe (0, 10) creation module, configured to create the service pipe (0, 10) between the user terminal device (4, 111) and the first optical edge device;

a first mapping creation module (1040), configured to create mapping between the application (113) and the service pipe (0, 10); and

a first sending module (1050), configured to send, to the access side device, information about the mapping, to enable service data associated with the application (113) to be transmitted through the service pipe (0, 10).

14. The network management device (180) according to claim 13, wherein the first determining module (1020) is further configured to:

determine a plurality of candidate optical edge devices based on the identifier (1, 121, 134) of the application (113) and the identifier (1, 121, 134) of the access side device; and
select the first optical edge device from the plurality of candidate optical edge devices based on load statuses of the plurality of candidate optical edge devices or historical statistics information of quality of service that is of the plurality of candidate optical edge devices and that is for the application (113).

15. The network management device (180) according to claim 14, wherein the network management device (180) further comprises:

a statistics information obtaining module, configured to periodically obtain, from the plurality of candidate optical edge devices, statistics information of the quality of service that is of the plurality of candidate optical edge devices and that is for the application (113); and
the first determining module (1020) is further configured to determine the historical statistics information based on the obtained statistics information.

16. The network management device (180) according to claim 13, wherein

the first determining module (1020) is further configured to determine, based on an identifier (1, 121, 134) of the first optical edge device, the identifier (1, 121, 134) of the access side device, and quality of service needed by the application (113), a bearer tunnel (610, 620, 630) for bearing the service pipe (0, 10);
the first mapping creation module (1040) is further configured to create mapping between the service pipe (0, 10) and the bearer tunnel (610, 620, 630); and
the first sending module (1050) is further configured to separately send, to the access side device and the first optical edge device, information about the mapping between the service pipe (0, 10) and the bearer tunnel (610, 620, 630).

17. The network management device (180) according to claim 13, wherein the first receiving module (1010) is further configured to receive, from the access side device, a second request message for tearing down the service pipe (0, 10); and
the network management device (180) further comprises:
a tearing-down module, configured to tear down the service pipe (0, 10) based on the second request message.

18. The network management device (180) according to claim 13, further comprising:

a second receiving module, configured to receive, from the access side device, a third request message for creating a user-level service pipe, wherein the third request message comprises the identifier (1, 121, 134) of the access side device;
a second determining module, configured to determine a second optical edge device based on the identifier (1, 121, 134) of the access side device and load statuses of a plurality of candidate optical edge devices;
a second service pipe (0, 10) creation module, configured to create the user-level service pipe between the user terminal device (4, 111) and the second optical edge device;
a second mapping creation module, configured to create mapping between a user of the user terminal device (4, 111) and the user-level service pipe; and
a second sending module, configured to send, to the access side device, information about the mapping between the user and the user-level service pipe, to enable service data associated with the user to be transmitted through the user-level service pipe.

19. The network management device (180) according to claim 13, further comprising:

a third receiving module, configured to receive, from the access side device, a fourth request message for creating a terminal-level service pipe, wherein the fourth request message comprises an identifier (1, 121, 134) of the user terminal device (4, 111), a type of the user terminal device (4, 111), and the identifier (1, 121, 134) of the access side device;
a third determining module, configured to determine a third optical edge device based on the identifier (1, 121, 134) of the user terminal device (4, 111), the type of the user terminal device (4, 111), and the identifier (1, 121, 134) of the access side device;

23

a third service pipe (0, 10) creation module, configured to create the terminal-level service pipe between the user terminal device (4, 111) and the third optical edge device;

a third mapping creation module, configured to create mapping between the user terminal device (4, 111) and the terminal-level service pipe; and

a third sending module, configured to send, to the access side device, information about the mapping between the user terminal device (4, 111) and the terminal-level service pipe, to enable service data associated with the user terminal device (4, 111) to be transmitted through the terminal-level service pipe.

**20.** An electronic device (1200), comprising the network management device (180) according to one or more of claims 13 to 19.

**Patentansprüche**

**1.** Optisches Kommunikationsverfahren, umfassend:

Empfangen (713, 810) einer ersten Anforderungsnachricht zum Herstellen einer Dienstleitung (0, 10) durch eine Netzwerkverwaltungsvorrichtung (180) aus einer Zugangsseitenvorrichtung, wobei die erste Anforderungsnachricht eine Kennung (1, 121, 134) einer Anwendung (113), auf die eine Benutzerendgerätevorrichtung (4, 111) den Zugang anfordert, und eine Kennung (1, 121, 134) der Zugangsseitenvorrichtung umfasst; Bestimmen (820) einer ersten optischen Randvorrichtung durch die Netzwerkverwaltungsvorrichtung (180) basierend auf der Kennung (1, 121, 134) der Anwendung (113) und der Kennung (1, 121, 134) der Zugangsseitenvorrichtung; Herstellen (830) der Dienstleitung (0, 10) zwischen der Zugangsseitenvorrichtung und der ersten optischen Randvorrichtung durch die Netzwerkverwaltungsvorrichtung (180); Herstellen (717, 840) einer Zuordnung zwischen der Anwendung (113) und der Dienstleitung (0, 10) durch die Netzwerkverwaltungsvorrichtung (180); und

Senden (850) von Informationen über die Zuordnung durch die Netzwerkverwaltungsvorrichtung (180) an die Zugangsseitenvorrichtung, um zu ermöglichen, dass Dienstdaten, die mit der Anwendung (113) assoziiert sind, durch die Dienstleitung (0, 10) hindurch übertragen werden.

**2.** Verfahren (800, 900) nach Anspruch 1, wobei das Herstellen (830) der Dienstleitung (0, 10) Folgendes umfasst:

Bestimmen (820) einer Vielzahl von optischen Kandidaten-Randvorrichtungen durch die Netzwerkverwaltungsvorrichtung (180) basierend auf der Kennung (1, 121, 134) der Anwendung (113) und der Kennung (1, 121, 134) der Zugangsseitenvorrichtung; und

Auswählen der ersten optischen Randvorrichtung aus der Vielzahl von optischen Kandidaten-Randvorrichtungen durch die Netzwerkverwaltungsvorrichtung (180) basierend auf Belastungsstatus der Vielzahl von optischen Kandidaten-Randvorrichtungen oder von historischen Statistikinformationen zur Dienstgüte, die von der Vielzahl von optischen Kandidaten-Randvorrichtungen stammen und für die Anwendung (113) dienen.

**3.** Verfahren (800, 900) nach Anspruch 2, ferner umfassend:

periodisches Erlangen von Statistikinformationen zur Dienstgüte, die von der Vielzahl von optischen Kandidaten-Randvorrichtungen stammen und für die Anwendung (113) dienen, durch die Netzwerkverwaltungsvorrichtung (180) aus der Vielzahl von optischen Kandidaten-Randvorrichtungen; und

Bestimmen der historischen Statistikinformationen durch die Netzwerkverwaltungsvorrichtung (180) basierend auf den erlangten Statistikinformationen.

**4.** Verfahren (800, 900) nach Anspruch 1, ferner umfassend:

Bestimmen eines Trägertunnels (610, 620, 630) zum Tragen der Dienstleitung (0, 10) durch die Netzwerkverwaltungsvorrichtung (180) basierend auf einer Kennung (1, 121, 134) der ersten optischen Randvorrichtung, der Kennung (1, 121, 134) der Zugangsseitenvorrichtung und der durch die Anwendung (113) benötigten Dienstgüte; Herstellen einer Zuordnung zwischen der Dienstleitung (0, 10) und dem Trägertunnel (610, 620, 630) durch die Netzwerkverwaltungsvorrichtung (180); und

separates Senden von Informationen über die Zuordnung zwischen der Dienstleitung (0, 10) und dem Trägertunnel (610, 620, 630) durch die Netzwerkverwaltungsvorrichtung (180) an die Zugangsseitenvorrichtung und die erste optische Randvorrichtung.

**5.** Verfahren (800, 900) nach Anspruch 1, ferner umfassend:

Empfangen einer zweiten Anforderungsnachricht zum Entfernen der Dienstleitung (0, 10) durch die Netzwerkverwaltungsvorrichtung (180) aus der Zugangsseitenvorrichtung; und
Entfernen der Dienstleitung (0, 10) durch die Netzwerkverwaltungsvorrichtung (180) basierend der zweiten Anforderungsnachricht.

**6.** Verfahren (800, 900) nach Anspruch 1, wobei die Zugangsseitenvorrichtung ein optisches Netzwerkendgerät oder einen optischen Leitungsabschluss umfasst.

**7.** Optisches Kommunikationsverfahren, umfassend:

nachdem eine Zugangsseitenvorrichtung eine Benutzeranforderungsnachricht zum Zugreifen auf eine Anwendung (113) aus einer Benutzerendgerätevorrichtung (4, 111) empfangen hat, Bestimmen (910) durch die Zugangsseitenvorrichtung, ob eine Dienstleitung (0, 10) zwischen der Benutzerendgerätevorrichtung (4, 111) und einer ersten optischen Randvorrichtung hergestellt ist;
wenn bestimmt wird, dass die Dienstleitung (0, 10) nicht hergestellt ist, Senden einer ersten Anforderungsnachricht zum Herstellen der Dienstleitung (0, 10) durch die Zugangsseitenvorrichtung an eine Netzwerkverwaltungsvorrichtung (180), wobei die erste Anforderungsnachricht eine Kennung (1, 121, 134) der Anwendung (113) und eine Kennung (1, 121, 134) der Zugangsseitenvorrichtung umfasst;
Empfangen (930) von Informationen über eine Zuordnung zwischen der Anwendung (113) und der Dienstleitung (0, 10) durch die Zugangsseitenvorrichtung aus der Netzwerkverwaltungsvorrichtung (180); und
Ermöglichen (940) durch die Zugangsseitenvorrichtung basierend auf den Informationen, dass mit der Anwendung (113) assoziierten Dienstdaten durch die Dienstleitung (0, 10) hindurch übertragen werden.

**8.** Verfahren (800, 900) nach Anspruch 7, wobei das Bestimmen, ob eine Serviceleitung (0, 10) hergestellt ist, Folgendes umfasst:
Bestimmen einer Dienstleitungsrichtlinie, die mit der Anwendung (113) assoziiert ist, durch die Zugangsseitenvorrichtung basierend auf der Kennung (1, 121, 134) der Anwendung (113); und Bestimmen durch die Zugangsseitenvorrichtung als Reaktion darauf, dass die Dienstleitungsrichtlinie angibt, dass die mit der Anwendung (113) assoziierten Dienstdaten durch die Dienstleitung (0, 10) hindurch übertragen werden, ob die Dienstleitung (0, 10) hergestellt ist.

**9.** Verfahren (800, 900) nach Anspruch 8, ferner umfassend:

wenn bestimmt wird, dass die Serviceleitung (0, 10) nicht hergestellt ist,
Aktualisieren einer mit der Anwendung (113) assoziierten Kommunikationssitzungsliste durch die Zugangsseitenvorrichtung basierend auf einer mit der Anwendung (113) assoziierten Kommunikationssitzung; und
Aktualisieren eines Status der Anwendung (113) auf gültig.

**10.** Verfahren (800, 900) nach Anspruch 7, wobei das Ermöglichen, dass mit der Anwendung (113) assoziierten Dienstdaten durch die Dienstleitung (0, 10) hindurch übertragen werden, Folgendes umfasst:

Konfigurieren einer mit der Anwendung (113) assoziierten Kommunikationssitzung durch die Zugangsseitenvorrichtung in einer Weiterleitungstabelle; und
Zuordnen des mit der Kommunikationssitzung assoziierten Datenverkehrs durch die Zugangsseitenvorrichtung zu der Dienstleitung (0, 10).

**11.** Verfahren (800, 900) nach Anspruch 7, ferner umfassend: Senden einer zweiten Anforderungsnachricht zum Entfernen der Dienstleitung (0, 10) durch die Zugangsseitenvorrichtung an die Netzwerkverwaltungsvorrichtung (180) als Reaktion auf das Erkennen, dass die Anwendung (113) offline ist.

**12.** Verfahren (800, 900) nach Anspruch 7, wobei die Zugangsseitenvorrichtung ein optisches Netzwerkendgerät oder einen optischen Leitungsabschluss umfasst.

**13.** Netzwerkverwaltungsvorrichtung (180) eines optischen Kommunikationsnetzwerks, wobei die Netzwerkverwaltungsvorrichtung (180) Folgendes umfasst:

ein erstes Empfangsmodul (1010), das dazu konfiguriert ist, eine erste Anforderungsnachricht zum Herstellen einer Dienstleitung (0, 10) aus einer Zugangsseitenvorrichtung zu empfangen, wobei die erste Anforderungsnachricht eine Kennung (1, 121, 134) einer Anwendung (113), auf die eine Benutzerendgerätevorrichtung (4, 111) den Zugang anfordert, und eine Kennung (1, 121, 134) der Zugangsseitenvorrichtung umfasst;

ein erstes Bestimmungsmodul (1020), das dazu konfiguriert ist, eine erste optische Randvorrichtung basierend auf der Kennung (1, 121, 134) der Anwendung (113) und der Kennung (1, 121, 134) der Zugangsseitenvorrichtung zu bestimmen;

ein Modul zur Herstellung der ersten Dienstleitung (0, 10), das dazu konfiguriert ist, die Dienstleitung (0, 10) zwischen der Benutzerendgerätevorrichtung (4, 111) und der ersten optischen Randvorrichtung herzustellen;

ein erstes Modul (1040) zur Herstellung der Zuordnung, das dazu konfiguriert ist, eine Zuordnung zwischen der Anwendung (113) und der Dienstleitung (0, 10) herzustellen; und

ein erstes Sendemodul (1050), das dazu konfiguriert ist, Informationen über die Zuordnung an die Zugangsseitenvorrichtung zu senden, um zu ermöglichen, dass die mit der Anwendung (113) assoziierten Dienstdaten durch die Dienstleitung (0, 10) hindurch übertragen werden.

14. Netzwerkverwaltungsvorrichtung (180) nach Anspruch 13, wobei das erste Bestimmungsmodul (1020) ferner dazu konfiguriert ist:

eine Vielzahl von optischen Kandidaten-Randvorrichtungen basierend auf der Kennung (1, 121, 134) der Anwendung (113) und
der Kennung (1, 121, 134) der Zugangsseitenvorrichtung zu bestimmen; und
die erste optische Randvorrichtung aus der Vielzahl von optischen Kandidaten-Randvorrichtungen basierend auf Belastungsstatus der Vielzahl von optischen Kandidaten-Randvorrichtungen oder von historischen Statistikinformationen zur Dienstgüte, die von der Vielzahl von optischen Kandidaten-Randvorrichtungen stammen und für die Anwendung (113) dienen, auszuwählen.

15. Netzverwaltungsvorrichtung(180) nach Anspruch 14, wobei die Netzverwaltungsvorrichtung (180) ferner Folgendes umfasst:

ein Modul zum Erlangen von Statistikinformationen, das dazu konfiguriert ist, aus der Vielzahl von optischen Kandidaten-Randvorrichtungen periodisch Statistikinformationen zur Dienstgüte, die von der Vielzahl von optischen Kandidaten-Randvorrichtungen stammen und die für die Anwendung (113) dienen, zu erlangen; und
das erste Bestimmungsmodul (1020) ferner dazu konfiguriert ist, die historischen Statistikinformationen basierend auf den erlangten Statistikinformationen zu bestimmen.

16. Netzwerkverwaltungsvorrichtung (180) nach Anspruch 13, wobei

das erste Bestimmungsmodul (1020) ferner dazu konfiguriert ist, einen Trägertunnel (610, 620, 630) zum Tragen der Dienstleitung (0, 10) basierend auf einer Kennung (1, 121, 134) der ersten optischen Randvorrichtung, der Kennung (1, 121, 134) der Zugangsseitenvorrichtung und der durch die Anwendung (113) benötigten Dienstgüte zu bestimmen;
das erste Modul (1040) zur Herstellung der Zuordnung ferner dazu konfiguriert ist, eine Zuordnung zwischen der Dienstleitung (0, 10) und dem Trägertunnel (610, 620, 630) herzustellen; und
das erste Sendemodul (1050) ferner dazu konfiguriert ist, Informationen über die Zuordnung zwischen der Dienstleitung (0, 10) und dem Trägertunnel (610, 620, 630) separat an die Zugangsseitenvorrichtung und die erste optische Randvorrichtung zu senden.

17. Netzwerkverwaltungsvorrichtung (180) nach Anspruch 13, wobei das erste Empfangsmodul (1010) ferner dazu konfiguriert ist, eine zweite Anforderungsnachricht zum Entfernen der Dienstleitung (0, 10) aus der Zugangsseitenvorrichtung zu empfangen; und
die Netzwerkverwaltungsvorrichtung (180) ferner Folgendes umfasst:
ein Modul zum Entfernen, das dazu konfiguriert ist, die Dienstleitung (0, 10) basierend auf der zweiten Anforderungsnachricht zu entfernen.

18. Netzwerkverwaltungsvorrichtung (180) nach Anspruch 13, ferner umfassend:

ein zweites Empfangsmodul, das dazu konfiguriert ist, eine dritte Anforderungsnachricht zum Herstellen einer Dienstleitung auf Benutzerebene aus der Zugangsseitenvorrichtung zu empfangen, wobei die dritte Anforderungsnachricht die Kennung (1, 121, 134) der Zugangsseitenvorrichtung umfasst;

ein zweites Bestimmungsmodul, das dazu konfiguriert ist, eine zweite optische Randvorrichtung basierend auf der Kennung (1, 121, 134) der Zugangsseitenvorrichtung und Belastungsstatus einer Vielzahl von optischen Kandidaten-Randvorrichtungen zu bestimmen;

ein Modul zur Herstellung der zweiten Dienstleitung (0, 10), das dazu konfiguriert ist, die Dienstleitung auf Benutzerebene zwischen der Benutzerendgerätevorrichtung (4, 111) und der zweiten optischen Randvorrichtung herzustellen;

ein zweites Modul zur Herstellung der Zuordnung, das dazu konfiguriert ist, eine Zuordnung zwischen einem Benutzer der Benutzerendgerätevorrichtung (4, 111) und der Dienstleitung auf Benutzerebene herzustellen; und

ein zweites Sendemodul, das dazu konfiguriert ist, Informationen über die Zuordnung zwischen dem Benutzer und der Dienstleitung auf Benutzerebene an die Zugangsseitenvorrichtung zu senden, um zu ermöglichen, dass die mit dem Benutzer assoziierten Dienstdaten durch die Dienstleitung auf Benutzerebene hindurch übertragen werden.

19. Netzwerkverwaltungsvorrichtung (180) nach Anspruch 13, ferner umfassend:

ein drittes Empfangsmodul, das dazu konfiguriert ist, eine vierte Anforderungsnachricht zum Herstellen einer Dienstleitung auf Endgeräteebene aus der Zugangsseitenvorrichtung zu empfangen, wobei die vierte Anforderungsnachricht eine Kennung (1, 121, 134) der Benutzerendgerätevorrichtung (4, 111), einen Typen der Benutzerendgerätevorrichtung (4, 111) und die Kennung (1, 121, 134) der Zugangsseitenvorrichtung umfasst;

ein drittes Bestimmungsmodul, das dazu konfiguriert ist, eine dritte optische Randvorrichtung basierend auf der Kennung (1, 121, 134) der Benutzerendgerätevorrichtung (4, 111), dem Typen der Benutzerendgerätevorrichtung (4, 111) und der Kennung (1, 121, 134) der Zugangsseitenvorrichtung zu bestimmen;

ein Modul zur Herstellung der dritten Dienstleitung (0, 10), das dazu konfiguriert ist, die Dienstleitung auf Endgeräteebene zwischen der Benutzerendgerätevorrichtung (4, 111) und der dritten optischen Randvorrichtung herzustellen;

ein drittes Modul zur Herstellung der Zuordnung, das dazu konfiguriert ist, eine Zuordnung zwischen der Benutzerendgerätevorrichtung (4, 111) und der Dienstleitung auf Endgeräteebene herzustellen; und

ein drittes Sendemodul, das dazu konfiguriert ist, Informationen über die Zuordnung zwischen der Benutzerendgerätevorrichtung (4, 111) und der Dienstleitung auf Endgeräteebene an die Zugangsseitenvorrichtung zu senden, um zu ermöglichen, dass die mit der Benutzerendgerätevorrichtung (4, 111) assoziierten Dienstdaten durch die Dienstleitung auf Endgeräteebene hindurch übertragen werden.

20. Elektronische Vorrichtung (1200), umfassend die Netzwerkverwaltungsvorrichtung (180) nach einem oder mehreren der Ansprüche 13 bis 19.

## Revendications

1. Procédé de communication optique, comprenant :

la réception (713, 810), par un dispositif de gestion de réseau (180) à partir d'un dispositif côté accès, d'un premier message de demande pour la création d'un tuyau de service (0, 10), dans lequel le premier message de demande comprend un identifiant (1, 121, 134) d'une application (113) à laquelle un dispositif terminal utilisateur (4, 111) demande d'accéder et un identifiant (1, 121, 134) du dispositif côté accès ;

la détermination (820), par le dispositif de gestion de réseau (180), d'un premier dispositif périphérique optique sur la base de l'identifiant (1, 121, 134) de l'application (113) et de l'identifiant (1, 121, 134) du dispositif côté accès ;

la création (830), par le dispositif de gestion de réseau (180), du tuyau de service (0, 10) entre le dispositif côté accès et le premier dispositif périphérique optique ;

la création (717, 840), par le dispositif de gestion de réseau (180), d'un mappage entre l'application (113) et le tuyau de service (0, 10) ; et

l'envoi (850), par le dispositif de gestion de réseau (180) au dispositif côté accès, d'informations sur le mappage, pour permettre aux données de service associées à l'application (113) d'être transmises via le tuyau de service (0, 10).

2. Procédé (800, 900) selon la revendication 1, dans lequel la création (830) du tuyau de service (0, 10) comprend :

la détermination (820), par le dispositif de gestion de réseau (180), d'une pluralité de dispositifs périphériques optiques candidats sur la base de l'identifiant (1, 121, 134) de l'application (113) et de l'identifiant (1, 121, 134) du dispositif côté accès ; et

la sélection, par le dispositif de gestion de réseau (180), du premier dispositif périphérique optique de la pluralité de dispositifs périphériques optiques candidats sur la base des états de charge de la pluralité de dispositifs périphériques optiques candidats ou des informations statistiques historiques de qualité de service qui sont de la pluralité de dispositifs périphériques optiques candidats et qui sont pour l'application (113).

3. Procédé (800, 900) selon la revendication 2, comprenant également :

l'obtention périodiquement, par le dispositif de gestion de réseau (180) à partir de la pluralité de dispositifs périphériques optiques candidats, d'informations statistiques sur la qualité de service qui sont de la pluralité de dispositifs périphériques optiques candidats et qui sont pour l'application (113) ; et

la détermination, par le dispositif de gestion de réseau (180), des informations statistiques historiques sur la base des informations statistiques obtenues.

4. Procédé (800, 900) selon la revendication 1, comprenant également :

la détermination, par le dispositif de gestion de réseau (180) sur la base d'un identifiant (1, 121, 134) du premier dispositif périphérique optique, de l'identifiant (1, 121, 134) du dispositif côté accès, et de la qualité de service requise par l'application (113), d'un tunnel porteur (610, 620, 630) pour porter le tuyau de service (0, 10) ;

la création, par le dispositif de gestion de réseau (180), d'un mappage entre le tuyau de service (0, 10) et le tunnel porteur (610, 620, 630) ; et

l'envoi séparé, par le dispositif de gestion de réseau (180) au dispositif côté accès et au premier dispositif périphérique optique, d'informations sur le mappage entre le tuyau de service (0, 10) et le tunnel porteur (610, 620, 630).

5. Procédé (800, 900) selon la revendication 1, comprenant également :

la réception, par le dispositif de gestion de réseau (180) à partir du dispositif côté accès, d'un deuxième message de demande de démantèlement du tuyau de service (0, 10) ; et

le démantèlement, par le dispositif de gestion de réseau (180), du tuyau de service (0, 10) sur la base du deuxième message de demande.

6. Procédé (800, 900) selon la revendication 1, dans lequel le dispositif côté accès comprend un terminal de réseau optique ou une terminaison de ligne optique.

7. Procédé de communication optique, comprenant :

après qu'un dispositif côté accès reçoit un message de demande utilisateur pour accéder à une application (113) à partir d'un dispositif terminal utilisateur (4, 111), le fait de déterminer (910), par le dispositif côté accès, si un tuyau de service (0, 10) entre le dispositif terminal utilisateur (4, 111) et un premier dispositif périphérique optique est créé ;

s'il est déterminé que le tuyau de service (0, 10) n'est pas créé, l'envoi, par le dispositif côté accès à un dispositif de gestion de réseau (180), d'un premier message de demande pour la création du tuyau de service (0, 10), dans lequel le premier message de demande comprend un identifiant (1, 121, 134) de l'application (113) et un identifiant (1, 121, 134) du dispositif côté accès ;

la réception (930), par le dispositif côté accès à partir du dispositif de gestion de réseau (180), d'informations sur le mappage entre l'application (113) et le tuyau de service (0, 10) ; et

le fait de permettre (940), par le dispositif côté accès sur la base des informations, aux données de service associées à l'application (113) d'être transmises via le tuyau de service (0, 10).

8. Procédé (800, 900) selon la revendication 7, dans lequel le fait de déterminer si un tuyau de service (0, 10) est créé comprend :

la détermination, par le dispositif côté accès sur la base de l'identifiant (1, 121, 134) de l'application (113), d'une politique de tuyau de service associée à l'application (113) ; et

le fait de déterminer, par le dispositif côté accès en réponse au fait que la politique de tuyau de service indique que les données de service associées à l'application (113) sont transmises via le tuyau de service (0, 10), si le tuyau de service (0, 10) est créé.

9. Procédé (800, 900) selon la revendication 8, comprenant également :

   s'il est déterminé que le tuyau de service (0, 10) n'est pas créé,
   la mise à jour, par le dispositif côté accès sur la base d'une session de communication associée à l'application (113), d'une liste de sessions de communication associée à l'application (113) ; et
   la mise à jour d'un statut de l'application (113) à valide.

10. Procédé (800, 900) selon la revendication 7, dans lequel le fait de permettre aux données de service associées à l'application (113) d'être transmises via le tuyau de service (0, 10) comprend :

    la configuration, par le dispositif côté accès dans une table de transfert, d'une session de communication associée à l'application (113) ; et
    le mappage, par le dispositif côté accès au tuyau de service (0, 10), du trafic associé à la session de communication.

11. Procédé (800, 900) selon la revendication 7, comprenant également :
    l'envoi, par le dispositif côté accès au dispositif de gestion de réseau (180) en réponse à la détection que l'application (113) est hors ligne, d'un deuxième message de demande de démantèlement du tuyau de service (0, 10).

12. Procédé (800, 900) selon la revendication 7, dans lequel le dispositif côté accès comprend un terminal de réseau optique ou une terminaison de ligne optique.

13. Dispositif de gestion de réseau (180) d'un réseau de communication optique, dans lequel le dispositif de gestion de réseau (180) comprend :

    un premier module de réception (1010), configuré pour recevoir, à partir d'un dispositif côté accès, un premier message de demande pour la création d'un tuyau de service (0, 10), dans lequel le premier message de demande comprend un identifiant (1, 121, 134) d'une application (113) à laquelle un dispositif terminal utilisateur (4, 111) demande d'accéder et un identifiant (1, 121, 134) du dispositif côté accès ;
    un premier module de détermination (1020), configuré pour déterminer un premier dispositif périphérique optique sur la base de l'identifiant (1, 121, 134) de l'application (113) et de l'identifiant (1, 121, 134) du dispositif côté accès ;
    un premier module de création de tuyau de service (0, 10), configuré pour créer le tuyau de service (0, 10) entre le dispositif terminal utilisateur (4, 111) et le premier dispositif périphérique optique ;
    un premier module de création de mappage (1040), configuré pour créer un mappage entre l'application (113) et le tuyau de service (0, 10) ; et
    un premier module d'envoi (1050), configuré pour envoyer, au dispositif côté accès, des informations sur le mappage, pour permettre aux données de service associées à l'application (113) d'être transmises via le tuyau de service (0, 10).

14. Dispositif de gestion de réseau (180) selon la revendication 13, dans lequel le premier module de détermination (1020) est également configuré pour :

    déterminer une pluralité de dispositifs périphériques optiques candidats sur la base de l'identifiant (1, 121, 134) de l'application (113) et de l'identifiant (1, 121, 134) du dispositif côté accès ; et
    sélectionner le premier dispositif périphérique optique de la pluralité de dispositifs périphériques optiques candidats sur la base des états de charge de la pluralité de dispositifs périphériques optiques candidats ou des informations statistiques historiques de qualité de service qui sont de la pluralité de dispositifs périphériques optiques candidats et qui sont pour l'application (113).

15. Dispositif de gestion de réseau (180) selon la revendication 14, dans lequel le dispositif de gestion de réseau (180) comprend également :

    un module d'obtention d'informations statistiques, configuré pour obtenir périodiquement, à partir de la pluralité de dispositifs périphériques optiques candidats, des informations statistiques sur la qualité de service qui sont de la pluralité de dispositifs périphériques optiques candidats et qui sont pour l'application (113) ; et
le premier module de détermination (1020) est également configuré pour déterminer les informations statistiques historiques sur la base des informations statistiques obtenues.

16. Dispositif de gestion de réseau (180) selon la revendication 13, dans lequel

le premier module de détermination (1020) est également configuré pour déterminer, sur la base d'un identifiant (1, 121, 134) du premier dispositif périphérique optique, de l'identifiant (1, 121, 134) du dispositif côté accès, et de la qualité de service requise par l'application (113), un tunnel porteur (610, 620, 630) pour porter le tuyau de service (0, 10) ; le premier module de création de mappage (1040) est également configuré pour créer un mappage entre le tuyau de service (0, 10) et le tunnel porteur (610, 620, 630) ; et
le premier module d'envoi (1050) est également configuré pour envoyer séparément, au dispositif côté accès et au premier dispositif périphérique optique, des informations sur le mappage entre le tuyau de service (0, 10) et le tunnel porteur (610, 620, 630) .

17. Dispositif de gestion de réseau (180) selon la revendication 13, dans lequel le premier module de réception (1010) est également configuré pour recevoir, à partir du dispositif côté accès, un deuxième message de demande de démantèlement du tuyau de service (0, 10) ; et
le dispositif de gestion de réseau (180) comprend également : un module de démantèlement, configuré pour démanteler le tuyau de service (0, 10) sur la base du deuxième message de demande.

18. Dispositif de gestion de réseau (180) selon la revendication 13, comprenant également :

un deuxième module de réception, configuré pour recevoir, à partir du dispositif côté accès, un troisième message de demande pour créer un tuyau de service au niveau de l'utilisateur, dans lequel le troisième message de demande comprend l'identifiant (1, 121, 134) du dispositif côté accès ;
un deuxième module de détermination, configuré pour déterminer un deuxième dispositif périphérique optique sur la base de l'identifiant (1, 121, 134) du dispositif côté accès et des états de charge d'une pluralité de dispositifs périphériques optiques candidats ;
un deuxième module de création de tuyau de service (0, 10), configuré pour créer le tuyau de service au niveau de l'utilisateur entre le dispositif terminal utilisateur (4, 111) et le deuxième dispositif périphérique optique ;
un deuxième module de création de mappage, configuré pour créer un mappage entre un utilisateur du dispositif terminal utilisateur (4, 111) et le tuyau de service au niveau de l'utilisateur ; et
un deuxième module d'envoi, configuré pour envoyer, au dispositif côté accès, des informations sur le mappage entre l'utilisateur et le tuyau de service au niveau de l'utilisateur, pour permettre aux données de service associées à l'utilisateur d'être transmises via le tuyau de service au niveau de l'utilisateur.

19. Dispositif de gestion de réseau (180) selon la revendication 13, comprenant également :

un troisième module de réception, configuré pour recevoir, à partir du dispositif côté accès, un quatrième message de demande pour la création d'un tuyau de service au niveau du terminal, dans lequel le quatrième message de demande comprend un identifiant (1, 121, 134) du dispositif terminal utilisateur (4, 111), un type du dispositif terminal utilisateur (4, 111), et l'identifiant (1, 121, 134) du dispositif côté accès ;
un troisième module de détermination, configuré pour déterminer un troisième dispositif périphérique optique sur la base de l'identifiant (1, 121, 134) du dispositif terminal utilisateur (4, 111), du type du dispositif terminal utilisateur (4, 111), et de l'identifiant (1, 121, 134) du dispositif côté accès ;
un troisième module de création de tuyau de service (0, 10), configuré pour créer le tuyau de service au niveau du terminal entre le dispositif terminal utilisateur (4, 111) et le troisième dispositif périphérique optique ;
un troisième module de création de mappage, configuré pour créer un mappage entre le dispositif terminal utilisateur (4, 111) et le tuyau de service au niveau du terminal ; et
un troisième module d'envoi, configuré pour envoyer, au dispositif côté accès, des informations sur le mappage entre le dispositif terminal utilisateur (4, 111) et le tuyau de service au niveau du terminal, pour permettre aux données de service associées au dispositif terminal utilisateur (4, 111) d'être transmises via le tuyau de service au niveau du terminal.

20. Dispositif électronique (1200), comprenant le dispositif de gestion de réseau (180) selon une ou plusieurs des revendications 13 à 19.

100

Home network 110 | Access network 120 | Metropolitan area network 130 | Backbone network 140

132

111

112     121     131

Content

| Terminal | — | ONT | — | OLT | — | Convergence device | — | BNG |

International internet 150

IDC/Public cloud 160

FIG. 1A

FIG. 1B

EP 4 383 747 B1

FIG. 2

EP 4 383 747 B1

FIG. 3

EP 4 383 747 B1

FIG. 4

FIG. 5

FIG. 6

700

112

**ONT**

180

**Network management device**

134

**O-E device**

711

712

Request for creating
a service pipe
713

714

715

716

Mapping between an
application and the service pipe
717

718

Request for tearing
down the service pipe
719

720

FIG. 7

800

810

Receive, from an access side device, a first request message for creating a service pipe, where the first request message includes an identifier of an application that a user terminal device requests to access and an identifier of the access side device

820

Determine a first optical edge device based on the identifier of the application and the identifier of the access side device

830

Create the service pipe between the terminal device and the first optical edge device

840

Create mapping between the application and the service pipe

850

Send, to the access side device, information about the mapping, to enable service data associated with the application to be transmitted through the service pipe

FIG. 8

900

Determine whether
a service pipe between a terminal
device and a first optical edge device is
created
910

No
920

Send, to a network management device, a first request message for creating the service pipe, where the first request message includes an identifier of an application and an identifier of an access side device

930

Receive, from the network management device, information about mapping between the application and the service pipe

940

Enable, based on the information, service data associated with the application to be transmitted through the service pipe

FIG. 9

1000

1010

First receiving module

1020

First determining module

1030

First service pipe creation module

1040

First mapping creation module

1050

First sending module

FIG. 10

1100

1110
Determining module

1120
Sending module

1130
Receiving module

1140
Transmission module

FIG. 11

1200

1240
Communication module

1210
Processor

Memory 1220

RAM 1222

ROM 1224

1230

FIG. 12

**EP 4 383 747 B1**

**Patent documents cited in the description**

- CN 202111177891

- CN 115967873 A

**Non-patent literature cited in the description**

- F5G Network Architecture Specification F5G Network Architecture Specification. ETSI DRAFT SPECIFICATION. EUROPEAN TELECOMMUNICATIONS STANDARDS INSTITUTE (ETSI), 08 September 2021, 1-37